# EUROPÄISCHE PATENTSCHRIFT

(11) **EP 3 694 794 B1**
(45) Veröffentlichungstag und Bekanntmachung des Hinweises auf die Patenterteilung: **02.07.2025**
(21) Anmeldenummer: 18782718.3
(22) Anmeldetag: 02.10.2018
(51) Int. Cl.: B65G 47/08, B65G 47/244, B65G 43/08, B65G 47/26, B65G 47/30

(54) **VORRICHTUNG UND VERFAHREN ZUM UMGANG MIT IN MINDESTENS ZWEI PARALLELEN REIHEN BEWEGTEN STÜCKGÜTERN**
DEVICE AND METHOD FOR HANDLING PIECE GOODS MOVED IN AT LEAST TWO PARALLEL ROWS
DISPOSITIF ET PROCÉDÉ DE MANIPULATION DE MARCHANDISES ARRANGÉES EN AU MOINS DEUX RANGÉES PARALLÈLES

(30) Priorität: 10.10.2017 DE 102017123558
(43) Veröffentlichungstag der Anmeldung: 19.08.2020
(73) Patentinhaber: Krones Aktiengesellschaft, 93073 Neutraubling (DE)
(72) Erfinder: WESTERMEIER, Christian, 93073 Neutraubling (DE); BEER, Erhard, 93073 Neutraubling (DE); KIRZINGER, Johannes, 93073 Neutraubling (DE); KOLLMUSS, Manuel, 93073 Neutraubling (DE); EHBERGER, Marco, 93073 Neutraubling (DE); ASTNER, Michael, 93073 Neutraubling (DE); GRIMM, Sebastian, 93073 Neutraubling (DE); MEHDI, Arsalan, 93073 Neutraubling (DE); SCHWALB, Felix, 93073 Neutraubling (DE)
(74) Vertreter: Benninger, Johannes
(86) Internationale Anmeldenummer: PCT/EP2018/076872
(87) Internationale Veröffentlichungsnummer: WO 2019/072658

(56) Entgegenhaltungen:
- WO-A1-2018/015029
- WO-A1-2018/108326
- WO-A1-2019/072659
- DE-A1- 102013 204 095
- DE-A1- 102017 205 001
- DE-A1- 102017 206 995
- DE-A1- 102017 207 353
- US-A1- 2009 218 193

## Beschreibung

Die vorliegende Erfindung betrifft eine Vorrichtung zum Umgang mit in mindestens zwei parallelen Reihen bewegten Stückgütern mit den Merkmalen des unabhängigen Anspruchs 1. Weiterhin betrifft die Erfindung ein Verfahren zum Umgang mit in mindestens zwei parallelen Reihen bewegten Stückgütern mit den Merkmalen des unabhängigen Verfahrensanspruchs 8.

Bei bekannten Verfahren zur Verpackung und/oder Palettierung von Stückgütern wie Paketen, Gebinden o. dgl. werden diese zunächst auf in Linien fördernden Transporteinrichtungen transportiert und in geeigneter Weise verschoben, ausgerichtet und/oder zusammengestellt, um gewünschte Lagenbilder zu erzeugen, die anschließend mehrfach übereinandergestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster oder Zusammenstellungen von Stückgütern oder Artikeln handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Die EP 1 456 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

Angesichts des bekannten Standes der Technik kann es als vorrangiges Ziel der vorliegenden Erfindung angesehen werden, eine exakte und positionsgenaue und insbesondere schnelle Verarbeitung und Handhabung von Stückgütern zu ermöglichen, die in mindestens zwei Reihen befördert bzw. transportiert werden. Die Bewegungssteuerung eines Manipulators zur Erfassung der Stückgüter soll exakt auf die Position der angelieferten Stückgüter abstimmbar sein, ohne dass hierzu ein großer Rechen- und/oder Steuerungsaufwand erforderlich sein soll. Alternativ und/oder zusätzlich soll die Position der angelieferten Stückgüter angepasst werden, um eine exakte und positionsgenaue Verarbeitung und Handhabung von Stückgütern zu gewährleisten

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit in mindestens zwei parallelen Reihen bewegten Stückgütern und mit einem Verfahren zum Umgang mit in mindestens zwei parallelen Reihen bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Weiterhin zeigen die Offenlegungsschriften WO 2018/108326 A1, WO 2018/015029 A1, DE 10 2017 205 001 A1, DE 10 2017 206 995 A1, US 2009/218193 A1 und DE 10 2013 204 095 A1 jeweils eine Vorrichtung und ein Verfahren zum Umgang mit bewegten Stückgütern, bei denen Raumkoordination der Stückgüter sensorisch erfasst werden. Insbesondere offenbart die WO2018/108326 eine Vorrichtung zum Umgang mit in mindestens zwei parallelen Reihen bewegten Stückgütern gemäß dem Oberbegriff des Anspruchs 1 und ein Verfahren zum Umgang mit in mindestens zwei parallelen Reihen bewegten Stückgütern gemäß dem Oberbegriff des Anspruchs 8.

Die Erfindung betrifft eine Vorrichtung sowie ein Verfahren zum Umgang mit in mindestens zwei parallelen Reihen bewegten Stückgütern. Die Stückgüter werden über wenigstens zwei Transporteinrichtungen in einer Transportrichtung zu einem Erfassungsbereich mindestens eines Manipulators transportiert. Dem Erfassungsbereich und/oder Bewegungsraum des wenigstens einen Manipulators ist wenigstens eine bewegbare optische Erfassungseinrichtung zur Gewinnung von Raumkoordinaten und/oder Positions- und/oder Umrissdaten wenigstens eines in Transportrichtung bewegten Stückgutes der wenigstens zwei Transporteinrichtungen zugeordnet. Zumindest der Manipulator und/oder weitere Förderkomponenten der Vorrichtung können auf Grundlage der Raumkoordinaten und/oder Positions- und/oder Umrissdaten kalibriert und/oder gesteuert werden.

Hierbei ist vorgesehen, dass die mindestens eine optische Erfassungseinrichtung zumindest temporär parallel beweglich zu einer dem Erfassungsbereich zugeordneten Horizontalfördereinrichtung ausgebildet ist.

Je Transporteinrichtung ist eine optische Erfassungseinrichtung vorgesehen,

Mindestens zwei optische Erfassungseinrichtungen sind im Bereich einer Längsseite der Horizontalfördereinrichtung parallel zur Transportrichtung in oder entgegen der Transportrichtung beweglich angeordnet. Die mindestens zwei optischen Erfassungseinrichtungen sind in unterschiedlichen Höhen oberhalb einer durch die Horizontalfördereinrichtung gebildeten Förderfläche oder Förderebene für die Stückgüter angeordnet. Die mindestens zwei optischen Erfassungseinrichtungen umfassen im Bereich einer Längsseite der Horizontalfördereinrichtung einen gemeinsamen Antrieb und einen gemeinsamen Bewegungsbereich. Wenn im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens zwei Reihen hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens zwei Reihen hintereinander bewegten Stückgütern. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den bewegten Stückgütern kann es sich gemäß einer bevorzugten Ausführungsform um in mindestens zwei Reihen hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in zwei Reihen hintereinander bewegten Stückgüter können dabei je nach Anforderung von nachfolgenden Handhabungsvorrichtungen gleich oder unterschiedlich ausgebildet sein.

Die Stückgüter können innerhalb der mindestens zwei Reihen auf unterschiedliche Art- und Weise transportiert werden. Gemäß einer Ausführungsform der Erfindung werden die Stückgüter innerhalb der Reihen jeweils über eine entsprechende Transporteinrichtung und jeweils voneinander beabstandet und durch Lücken voneinander getrennt zu einem Erfassungsbereich wenigstens eines Manipulators der erfindungsgemäßen Vorrichtung transportiert. Bevorzugt können auch Gruppen von Stückgütern dem Erfassungsbereich des wenigstens einen Manipulators zugeführt werden, wobei diese Gruppen jeweils mehrere, insbesondere mindestens zwei zumindest weitgehen lückenlos aneinandergrenzende Stückgüter innerhalb der mindestens zwei Reihen umfassen können. Die Gruppen können auch unterschiedlich groß sein; zudem kann einer Gruppe mit zwei, drei oder vier lückenlos aneinandergrenzenden Stückgütern ein einzelnes Stückgut folgen etc. Eine weitere Ausführungsform sieht vor, dass die Stückgüter innerhalb der mindestens zwei Reihen ohne Abstände oder mit minimalen Abständen als ununterbrochene bzw. geschlossene Formation zugeführt werden.

Unter einer geschlossenen Formation versteht man in diesem Zusammenhang insbesondere eine als Endlos-Formation ausgebildete Reihe an hintereinander transportierten Stückgütern, die keine Unterbrechung oder nur minimale Unterbrechungen zwischen den Stückgütern aufweist und eine beliebige Anzahl von Stückgütern umfassen kann. In der geschlossenen Formation können die Stückgüter insbesondere Stoß an Stoß transportiert werden. Dies wird beispielsweise durch einen einmalig aufgebrachten Staudruck von hinten verursacht. Der Staudruck wird dabei vorzugsweise vor oder kurz vor dem Erfassungsbereich des mindestens einen Manipulators der Handhabungsvorrichtung erzeugt. Alternativ kann vorgesehen sein, dass dauerhaft zumindest ein leichter Staudruck von hinten auf die Stückgüter einwirkt. Die geschlossene Formation ist von einer unterbrochenen Formation zu unterscheiden, bei der jeweils Gruppen mit jeweils einer definierten Anzahl von Stückgütern nacheinander zugeführt werden, wobei die Gruppen jeweils dieselbe Anzahl an Stückgütern oder eine unterschiedliche Anzahl an Stückgütern umfassen und jeweils durch Lücken voneinander getrennt sind.

Die mindestens zwei Transporteinrichtungen der Vorrichtung können beispielsweise jeweils durch einen Horizontalförderer, insbesondere ein Horizontalförderband, gebildet werden. Von der Transporteinrichtung gelangen die Stückgüter auf eine nachfolgend angeordnete Horizontalfördereinrichtung. Die Horizontalfördereinrichtung und der Manipulator mit seinem Erfassungsbereich bilden insbesondere das Gruppiermodul der Vorrichtung. Die Horizontalfördereinrichtung wird insbesondere durch eine Mehrzahl von Gruppierbändern gebildet, deren Anzahl insbesondere der Anzahl der zuführenden Transporteinrichtungen entspricht, wobei jeweils ein Gruppierband der Horizontalfördereinrichtung in Transportrichtung fluchtend an eine Transporteinrichtung anschließt. Die Gruppierbänder bilden gemeinsam eine Horizontalförderfläche, auf der einlaufende Stückgüter durch den mindestens einen Manipulator der Vorrichtung innerhalb des Erfassungsbereiches erfasst, in eine Zielposition und/oder Zielausrichtung verbracht und insbesondere auch freigegeben werden. Es kann vorgesehen sein, dass die Gruppierbänder jeweils einzeln ansteuerbar sind. Bevorzugt ist jedoch vorgesehen, dass sich die Gruppierbänder synchron bewegen.

Der Erfassungsbereich im Sinne der vorliegenden Erfindung definiert insbesondere einen Bewegungsraum des wenigstens einen Manipulators der erfindungsgemäßen Vorrichtung. Der mindestens eine Manipulator ist typischerweise und/oder vorzugsweise zum klemmenden und/oder formschlüssigen und/oder kraftschlüssigen Erfassen und/oder Entgegennehmen jeweils mindestens eines Stückgutes aus mindestens einer der mittels der wenigstens zwei Transporteinrichtungen in den Erfassungsbereich des Manipulators einlaufenden mindestens zwei Reihen von hintereinander transportierten Stückgütern ausgebildet. Weiterhin ist der Manipulator zum Abtrennen und selektiven Überführen des mindestens einen erfassten Stückgutes in eine Zielposition und/oder Zielausrichtung ausgebildet.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter vorzugsweise parallel zur Transportrichtung der zulaufenden Stückgüter ausgerichtet.

Aus den bewegten Stückgütern mindestens einer der mindestens zwei Reihen, insbesondere aus den vereinzelt, in Gruppen oder als geschlossene Formation zugeführten Stückgütern, wird im Erfassungsbereich des wenigstens einen Manipulators wenigstens ein transportiertes Stückgut klemmend und/oder kraftschlüssig und/oder formschlüssig vom Manipulator erfasst, von den nachfolgenden Stückgütern der jeweiligen Reihe räumlich abgetrennt und in eine definierte relative Zielposition und/oder Zielausrichtung gegenüber den nachfolgenden Stückgütern gebracht. Dies erfolgt insbesondere in einem kontinuierlichen Prozess, bei dem die Zufuhr nachfolgender Stückgüter nicht unterbrochen wird, sondern kontinuierlich fortgeführt wird. Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sind.

Hierbei werden zumindest Raumkoordinaten und/oder Positions- und/oder Umrissdaten wenigstens eines in Transportrichtung bewegten Stückgutes der zum Erfassungsbereich transportierten Stückgüter vor dem Erfassen durch den Manipulator sensorisch erfasst und einer Steuer- und/oder Auswerteeinheit als Positionswert zur Verfügung gestellt.

Die hierzu notwendige Sensorik wird durch die mindestens zwei dem Erfassungsbereich und/oder einem Bewegungsraum des wenigstens einen Manipulators räumlich und/oder funktionell zugeordnete und vorzugsweise beweglich ausgebildeten optischen Erfassungseinrichtungen bereitgestellt. Diese dienen der Erfassung der oben genannten Daten, d.h. insbesondere der zumindest Raumkoordinaten und/oder Positions- und/oder Umrissdaten eines bewegten Stückguts bzw. auch nur dessen aktuelle Vorderkantenposition bzw. Umrissposition der mindestens zwei Reihen.

Zumindest der Manipulator und/oder weitere Förderkomponenten der Vorrichtung, beispielsweise die jeweilige Transporteinrichtung, über die die Stückgüter der jeweiligen Reihe dem Erfassungsbereich zugeführt werden oder das jeweilige dem Erfassungsbereich zugeordnete Gruppierband der Horizontalfördereinrichtung der jeweiligen Reihe etc. werden auf Grundlage der ermittelten Raumkoordinaten und/oder Positions- und/oder Umrissdaten kalibriert und/oder angesteuert. Weiterhin können die ermittelten Daten auch in Rückkoppelung der Position der beweglichen optischen Erfassungseinrichtung verwendet werden. Erfindungsgemäß löst das Erfassen einer Raumkoordinate oder von entsprechenden Positions- und/oder Umrissdaten eine Aktivierung oder Inaktivierung der optischen Erfassungseinrichtung, ein Mitführen der optischen Erfassungseinrichtung mit der Transporteinrichtung und/oder Horizontalfördereinrichtung aus o.ä. Sobald sich Abweichungen bei den Gebindemaßen u/o der Fördergeschwindigkeit o.ä. ergeben, kann das wie nachfolgend noch näher beschrieben ständig - d.h. für alle nachfolgenden Zyklen bzw. Manipulationsschritte - nachkorrigiert werden.

Gemäß einer bevorzugten Ausführungsform der vorliegenden Erfindung können die mindestens zwei optischen Erfassungseinrichtungen zumindest temporär parallel zu den dem Erfassungsbereich zugeordneten, mindestens zwei die Horizontalfördereinrichtung bildenden Gruppierbändern bewegt werden. Insbesondere sind die mindestens zwei optischen Erfassungseinrichtungen in etwa parallel beweglich zur Transportrichtung der Stückgüter auf den zuführenden Transporteinrichtungen bzw. der Horizontalfördereinrichtung ausgebildet. Die mindestens zwei beweglichen optischen Erfassungseinrichtungen sind insbesondere in einem Bewegungsbereich parallel zur Transportrichtung der Stückgüter bzw. der Gruppen von jeweils mindestens zwei gruppierten Stückgütern auf oder parallel zu der Horizontalfördereinrichtung des im Erfassungsbereich des Manipulators angeordneten Gruppiermoduls beweglich. Der Bewegungsbereich der optischen Erfassungseinrichtungen wird jeweils durch einen Anfangspunkt und einen Endpunkt begrenzt und definiert somit den Erkennungsbereich der jeweiligen optischen Erfassungseinrichtung. Um die Bewegung der optischen Erfassungseinrichtungen in Transportrichtung bzw. entgegen der Transportrichtung zu realisieren, ist diese beispielsweise auf einem Schlitten bzw. Laufschlitten angeordnet, der in einer Schiene, einen Zahnriemenantrieb o.ä. verfahren werden kann, wobei die Schiene parallel zu der in einer Flucht innerhalb einer Reihe hintereinander angeordneten Stückgütern neben oder oberhalb der Horizontalfördereinrichtung angeordnet ist. Insbesondere können die optischen Erfassungseinrichtungen zwischen dem Anfangspunkt und dem Endpunkt innerhalb des Bewegungsbereiches verfahren werden.

Gemäß einer Ausführungsform deckt der Bewegungsbereich bzw. Erkennungsbereich der optischen Erfassungseinrichtung eine Länge des gesamten Erfassungsbereichs des Manipulators parallel zur Transportrichtung ab. Insbesondere kann die optische Erfassungseinrichtung parallel zur gesamten Länge der Horizontalfördereinrichtung des Gruppiermoduls bewegt werden. Gemäß einer anderen Ausführungsform ist vorgesehen, dass der Bewegungsbereich bzw. Erkennungsbereich der optischen Erfassungseinrichtung nur einen in Transportrichtung an die Transporteinrichtung grenzenden Teilbereich der Horizontalfördereinrichtung des Gruppiermoduls abdeckt, während eine weitere alternative Ausführungsform ebenfalls offenbart wird, bei der die optische Erfassungseinrichtung einen Bewegungsbereich aufweist, der sich über die Horizontalfördereinrichtung des Gruppiermoduls hinaus erstreckt. Die Bewegung der optischen Erfassungseinrichtung ist vorzugsweise nicht mechanisch an die Bewegung des Manipulators gekoppelt. Insbesondere verfügt die optische Erfassungseinrichtung über einen eigenständigen, unabhängigen Antrieb. Gemäß einer Ausführungsform ist die optische Erfassungseinrichtung linearbeweglich, während der Manipulator zumindest innerhalb einer Bewegungsebene, vorzugsweise innerhalb eines dreidimensionalen Raumes verfahrbar ist. Wie nachfolgend noch näher beschrieben wird, kann dagegen über die Steuer- und/oder Auswerteeinheit eine elektronische Kopplung zwischen dem Manipulator und der optischen Erfassungseinrichtung vorgesehen sein.

Gemäß der Erfindung ist eine optische Erfassungseinrichtung je zuführender Transporteinrichtung bzw. je Reihe an zugeführten Stückgütern vorgesehen. Mindestens zwei Erfassungseinrichtungen sind im Bereich einer Längsseite der Horizontalfördereinrichtung parallel zur Transportrichtung beweglich angeordnet. Werden Stückgüter beispielsweise in zwei Reihen über zwei parallele Transporteinrichtungen dem Gruppiermodul zugeführt, dann sind auch zwei optische Erfassungseinrichtungen vorgesehen. Insbesondere ist eine erste optische Erfassungseinrichtung einer ersten Transporteinrichtung und eine zweite optische Erfassungseinrichtung einer zweiten Transporteinrichtung zugeordnet. Beide optische Erfassungseinrichtungen sind an einer der Längsseiten der Horizontalfördereinrichtung parallel zur Transportrichtung angeordnet. Insbesondere ist der Abstand der ersten Erfassungseinrichtung zu der zugeordneten ersten Reihe somit geringer als ein Abstand der zweiten Erfassungseinrichtung zu der zugeordneten zweiten Reihe.

Da den mindestens zwei im Bereich einer Längsseite der Horizontalfördereinrichtung angeordneten optischen Erfassungseinrichtungen ein gemeinsamer Antrieb zugeordnet ist, sind die mindestens zwei optischen Erfassungseinrichtungen zusammen innerhalb eines gemeinsamen Bewegungsbereichs an einer Längsseite der Horizontalfördereinrichtung beweglich ausgebildet.

Gemäß einer nicht erfindungsgemäßen Ausführungsform weist jede der mindestens zwei im Bereich einer Längsseite der Horizontalfördereinrichtung angeordneten optischen Erfassungseinrichtungen einen eigenen Antrieb auf, so dass die mindestens zwei optischen Erfassungseinrichtungen jeweils ihren eigenen Bewegungsbereich im Bereich der Längsseite der Horizontalfördereinrichtung aufweisen und unabhängig voneinander im Bereich der Längsseite der Horizontalfördereinrichtung parallel zur Transportrichtung in oder entgegen der Transportrichtung bewegt werden können.

Bei einer Vorrichtung mit zwei Transporteinrichtungen ist beispielsweise vorgesehen, dass beide optischen Erfassungseinrichtungen an einer Seite der Horizontalfördereinrichtung parallelbeweglich zur Transportrichtung angeordnet sind. Die mindestens zwei optischen Erfassungseinrichtungen weisen jeweils unterschiedliche Erkennungsbereiche auf, insbesondere deckt eine erste optische Erfassungseinrichtung einen ersten Erkennungsbereich im Erfassungsbereich des mindestens einen Manipulators der Vorrichtung fluchtend zu einer ersten der mindestens zwei Transporteinrichtungen ab und eine zweite optische Erfassungseinrichtung deckt einen zweiten Erkennungsbereich im Erfassungsbereich des mindestens einen Manipulators der Vorrichtung fluchtend zu einer zweiten der mindestens zwei Transporteinrichtungen ab. Die unterschiedlichen Erkennungsbereiche ergeben sich aufgrund unterschiedlicher Anordnung und/oder Ausrichtung der optischen Erfassungseinrichtungen, insbesondere Sensoren o.ä. Beispielsweise sind die mindestens zwei optischen Erfassungseinrichtungen in unterschiedlichen Höhen oberhalb der durch die Horizontalfördereinrichtung gebildeten Förderfläche oder Förderebene für die Stückgüter angeordnet. Zusätzlich kann vorgesehen sein, dass die optischen Erfassungseinrichtungen derart angeordnet sind, dass sie einen jeweils unterschiedlichen Erfassungswinkel aufweisen und somit einen unterschiedlichen Erkennungsbereich auf der Horizontalfördereinrichtung abdecken.

Nachfolgend wird beispielhaft ein Verfahren beim Produktionsstart beschrieben, bei dem die mindestens eine optische Erfassungseinrichtung die Position der einlaufenden Stückgüter der mindestens zwei Reihen erfasst. Die ermittelten Daten werden beispielsweise verwendet, um die Reihen anzugleichen bzw. den Bewegungsablauf des mindestens einen Manipulators mit den einlaufenden Stückgütern zu synchronisieren.

Ein erfindungsgemäßes Verfahren zum Umgang mit in mindestens zwei parallelen Reihen bewegten Stückgütern umfasst folgende Schritte.
- Im Erfassungsbereich wird wenigstens ein transportiertes Stückgut der mindestens zwei parallelen Reihen durch den wenigstens einen Manipulator erfasst, von nachfolgenden Stückgütern der jeweiligen Reihe räumlich abgetrennt und in eine definierte relative Zielposition und/oder Zielausrichtung gegenüber den nachfolgenden Stückgütern der jeweiligen Reihe gebracht.
- Hierbei werden zumindest Raumkoordinaten und/oder eine Position eines der in Transportrichtung zum Erfassungsbereich bewegten Stückgüter mindestens einer Reihe über wenigstens eine dem Erfassungsbereich räumlich und/oder funktionell zugeordneten und beweglich ausgebildeten optischen Erfassungseinrichtung sensorisch erfasst und einer Steuer- und/oder Auswerteeinheit als Positionswert zur Verfügung gestellt wird.
- Zumindest der Manipulator und/oder weitere zugeordnete Förderkomponenten wird/werden auf Grundlage der Raumkoordinaten und/oder Positions- und/oder Umrissdaten kalibriert und/oder gesteuert.
- Die optische Erfassungseinrichtung wird zumindest temporär parallel zu einer dem Erfassungsbereich zugeordneten Horizontalfördereinrichtung bewegt.
- Je Transporteinrichtung ist eine optische Erfassungseinrichtung vorgesehen, insbesondere ist jeder Reihe jeweils eine optische Erfassungseinrichtung zugeordnet, wobei mindestens zwei optische Erfassungseinrichtungen im Bereich einer Längsseite der Horizontalfördereinrichtung parallel zur Transportrichtung in oder entgegen der Transportrichtung bewegbar sind.
- Die mindestens zwei optischen Erfassungseinrichtungen sind in unterschiedlichen Höhen oberhalb einer durch die Horizontalfördereinrichtung gebildeten Förderfläche oder Förderebene für die Stückgüter angeordnet sind und
   - können über einen einzigen Antrieb gemeinsam innerhalb eines Bewegungsbereiches parallel zu einer dem Erfassungsbereich zugeordneten Horizontalfördereinrichtung bewegt werden.

Die mindestens eine optische Erfassungseinrichtung erfasst beim Starten der Vorrichtung beispielsweise die Vorderkante des innerhalb einer jeweilig zugeordneten Reihe zuvorderst einlaufenden Stückgutes. Sobald die optische Erfassungseinrichtung die Vorderkante oder ein anderes geeignetes Positionierungssignal des vordersten Stückgutes der zugeordneten Reihe detektiert hat, kann vorgesehen sein, dass die optische Erfassungseinrichtung zusammen mit dem Stückgut mitläuft, d.h. dass sich die optische Erfassungseinrichtung in derselben Geschwindigkeit wie das Stückgut in Transportrichtung bewegt. Nachdem der mindestens eine Manipulator nun mindestens ein Stückgut oder einen Takt umfassend mehrere Stückgüter der Reihe erfasst und von der Reihe abgetrennt hat, wird die optische Erfassungseinrichtung entgegen der Transportrichtung bewegt, bis sie die Vorderkante oder ein anderes geeignetes Positionierungssignal des neuen zuvorderst angeordneten Stückgutes der Reihe erkennt usw. Die derart ermittelten Positionsdaten werden an eine Steuer- und/oder Auswerteeinheit weitergegeben und gegebenenfalls zur Korrektur des Bewegungsablaufs des Manipulators und/oder zur Steuerung der Transporteinrichtung und/oder des Gruppierbandes, auf der sich die Stückgüter der jeweiligen Reihe bewegen, genutzt.

Aufgrund der bewegungstechnischen Koppelung der zwei optischen Erfassungseinrichtungen , kann es vorteilhaft sein, diese abwechselnd aktiv zu schalten, um eine saubere Signaltrennung und korrekte Positionsdaten für die jeweils zuvordersten Stückgüter der mindestens zwei Reihen zu erhalten.

Weiterhin wird eine nicht erfindungsgemäße Vorrichtung beschrieben, welche Vorrichtung genau einen Manipulator, mindestens zwei Transporteinrichtungen für Stückgüter und eine optische Erfassungseinrichtung umfasst, wobei die optische Erfassungseinrichtung zusätzlich in vertikaler Richtung beweglich ausgebildet ist und in mindestens zwei unterschiedlichen Höhenniveaus oberhalb einer durch die Horizontalfördereinrichtung gebildeten Förderfläche angeordnet werden können. Insbesondere kann die optische Erfassungseinrichtung in einer Anzahl von unterschiedlichen Höhenniveaus angeordnet werden, die der Anzahl der zuführenden Transporteinrichtungen entspricht. Die in mindestens zwei unterschiedlichen Höhenniveaus angeordnete optische Erfassungseinrichtung deckt mindestens zwei unterschiedliche Erkennungsbereiche im Erfassungsbereich der Vorrichtung ab.

Insbesondere ist die optische Erfassungseinrichtung derart einstellbar ausgebildet, dass sie einer ersten Arbeitsposition in einem ersten Höhenniveau angeordnet ist und einen ersten Erkennungsbereich fluchtend zu einer ersten der mindestens zwei Transporteinrichtungen abdeckt, wodurch Stückgüter der mindestens einen ersten Reihe erfasst werden. Weiterhin ist die optische Erfassungseinrichtung in einer zweiten Arbeitsposition in einem zweiten Höhenniveau angeordnet, so dass die optische Erfassungseinrichtung einen zweiten Erkennungsbereich fluchtend zu einer zweiten der mindestens zwei Transporteinrichtungen abdeckt, wodurch Stückgüter der mindestens einen zweiten Reihe erfasst werden usw. Um die optische Erfassungseinrichtung von der ersten Arbeitsposition in die zweite Arbeitsposition zu überführen, kann beispielsweise nur die Höhe, in der die optische Erfassungseinrichtung angeordnet ist, verändert werden. Alternativ oder zusätzlich kann der Erfassungswinkel der optischen Erfassungseinrichtung durch Verschwenken derselben um eine Drehachse parallel zur Transportrichtung eingestellt werden.

Die Verwendung einer einzigen Erfassungseinrichtung für mindestens zwei Transporteinrichtungen ist nur dann möglich, wenn nie gleichzeitig Stückgüter von den mindestens zwei zuführenden Reihen abgegriffen werden, beispielsweise wenn Stückgüter oder Gruppen von Stückgütern von mindestens zwei zuführenden Reihen sequentiell durch einen einzigen Manipulator abgearbeitet werden. Die optische Erfassungseinrichtung wird in einer Position innerhalb ihres Bewegungsbereichs angeordnet, die im Wesentlichen in einer Flucht zu einer Position des leeren, d.h. nicht mit mindestens einem Stückgut beladenen, Manipulators orthogonal zur Transportrichtung entspricht. Die optische Erfassungseinrichtung wird derart eingestellt, insbesondere auf einem Höhenniveau angeordnet, dass der Erkennungsbereich die Reihe abdeckt, von der mindestens ein Stückgut abgegriffen werden soll. Sobald der Manipulator mindestens ein Stückgut der oder einen Takt umfassend mehrere Stückgüter der Reihe erfasst und von der Reihe abgetrennt hat, wird die optische Erfassungseinrichtung entgegen der Transportrichtung bewegt, bis sie die Vorderkante oder ein anderes geeignetes Positionierungssignal des neuen zuvorderst angeordneten Stückgutes der Reihe erkennt und die Daten an die Steuer- und/oder Auswerteeinheit übermittelt. Nachdem die Daten erfasst sind, wird die optische Erfassungseinrichtung erneut in einer Position korrespondierend zur Position des Manipulators angeordnet. Greift dieser Stückgüter der bereits im vorausgehenden Schritt bearbeiteten Reihe ab, so muss die optische Erfassungseinrichtung nicht verstellt werden, da derselbe Erkennungsbereich abgedeckt werden muss. Soll der Manipulator dagegen Stückgüter der mindestens einen anderen Reihe abgreifen, so muss zusätzlich eine Verstellung der optischen Erfassungseinrichtung erfolgen, beispielsweise eine Verstellung des Höhenniveaus und/oder des Erfassungswinkels, um entsprechend den benötigten Erkennungsbereich einzustellen.

Die optische Erfassungseinrichtung wird vorzugsweise durch mindestens einen Kantenscanner, insbesondere einen Laserkantenscanner, gebildet ist, welcher der Steuer- und/oder Auswerteeinheit Raumkoordinaten und/oder Positions- und/oder Umrissdaten für ein bewegtes Stückgut liefert. Mit einem Kantenscanner sind detaillierte Positionsdaten erfassbar, so beispielsweise eine Schrägstellung und/oder andere Fehlpositionierung eines der Stückgüter, was ggf. bei der Erfassung durch den Manipulator korrigiert werden kann. Beispielsweise wird ein solcher Kantenscanner verwendet, um Raumkoordinaten und/oder Positions- und/oder Umrissdaten für das jeweils zuvorderst befindliche Stückgut und/oder einer in Transportrichtung nach vorne oder nach hinten weisender Umrisskante zu gewinnen.

Gemäß einer weiteren Ausführungsform wird als optische Erfassungseinrichtung mindestens eine Kamera mit nachgeschalteter Bildauswertung verwendet, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/oder Positions- und/oder Umrisswerte für das jeweils zuvorderst befindliche Stückgut und/oder dessen nach vorne oder nach hinten weisender Umrisskante.

Die genannten optischen Erfassungseinrichtungen bzw. Sensoreinrichtungen sind beispielhaft zu verstehen. Grundsätzlich können jedoch auch andere Sensorvarianten zum Einsatz kommen, so bspw. Ultraschallsensoren o. dgl. andere Sensorbauarten und/oder Erfassungsprinzipien. Weitere geeignete Sensoren können vom Fachmann ebenfalls vorteilhaft eingesetzt werden.

Der Manipulator ist weiterhin an eine Steuer- und/oder Auswerteeinheit gekoppelt. Die Steuer- und/oder Auswerteeinheit der Vorrichtung steuert beispielsweise allgemein die Bewegung des Manipulators und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Die sensorisch ermittelten Daten werden an die Steuer- und/oder Auswerteeinheit übermittelt und der wenigstens eine Manipulator und/oder die Bewegungssteuerung des wenigstens einen Manipulators und/oder weitere Förderkomponenten der Vorrichtung wie beispielsweise die mindestens zwei zuführenden Transporteinrichtungen und/oder die aus Gruppierbändern gebildete Horizontalfördereinrichtung wird /werden zumindest während der Erfassung wenigstens eines bewegten Stückgutes, beispielsweise während der Erfassung des wenigstens einen zuvorderst angeordneten Stückgutes, und der räumlichen Abtrennung des wenigstens einen Stückgutes von den nachfolgenden Stückgütern auf Grundlage der von der Steuer- und/oder Auswerteeinheit gelieferten Koordinaten- und/oder Positionswerte kalibriert. Beispielsweise erfolgt die Kalibrierung anhand von Koordinaten- und/oder Positionswerten für die jeweils zuvorderst befindlichen Stückgüter und/oder deren nach vorne oder nach hinten weisender Umrisskanten.

Die sensorisch ermittelten Werte werden insbesondere verwendet, um vermittels der Steuer- und/oder Auswerteeinheit einen Bewegungsablauf des Manipulators zu berechnen und/oder den Bewegungsablauf gegebenenfalls anzupassen und/oder zu korrigieren. Die berechneten Werde dienen vorzugsweise der selektiven Ansteuerung, Aktivierung und/oder Bewegung der Klemm- oder Greifmittel des Manipulators durch die Steuer- und/oder Auswerteeinheit der Handhabungsvorrichtung. Weiterhin können die Daten verwendet werden, um die Geschwindigkeit der zuführenden Transporteinrichtungen und/oder der weiterführenden Gruppierbänder zumindest kurzzeitig zu erhöhen oder zu reduzieren, um die Position der in das Gruppiermodul einlaufenden Stückgüter innerhalb des Gruppiermoduls zu korrigieren etc.

Bei der Steuer- und/oder Auswerteeinheit kann es sich insbesondere um eine elektronische und/oder programmierbare Steuer- und/oder Auswerteeinheit wie beispielsweise eine SPS handeln. In dieser können unterschiedliche Rezepte / Daten abgelegt sein, mit welchen jeweils unterschiedliche Stückgüter - beispielsweise Sechser-Gebinde und Vierer- Gebinde - geklemmt, freigegeben und/oder realisiert werden können, insbesondere um die Stückgüter gemäß einem vorgegebenen Lagenschema anzuordnen und somit für eine nachfolgende Palettierung vorzubereiten oder um die Stückgüter auf eine andere Anzahl von weiterführenden Transportspuren zu verteilen und dabei gegebenenfalls um 90 Grad zu drehen.

Ein wichtiger Aspekt der Erfindung besteht darin, dass eine seitlich zur Horizontalförderfläche angeordnete parallel zur Transportrichtung oder entgegen der Transportrichtung bewegliche mindestens eine optische Erfassungseinrichtung Stückgüter einer beabstandeten Reihe erfassen kann, wobei mindestens eine Reihe von Stückgütern zwischen der optischen Erfassungseinrichtung und der beabstandeten Reihe, verläuft.

Im Zusammenhang mit der Erfindung wird auch ein Abgreifen von mindestens zwei Stückgütern beschrieben, wobei jeweils mindestens ein Stückgut von mindestens zwei direkt benachbarten parallelen Reihen durch den Manipulator erfasst, von den nachfolgenden Stückgütern der mindestens zwei Reihen abgetrennt und in eine Zielposition und/oder Zielanordnung auf der Horizontalfördereinrichtung verbracht wird. Der Manipulator umfasst in diesem Fall eine Greiferanordnung mit Doppel- bzw. Mehrfachgreiferfunktion. Gemäß einer ersten Ausführungsform eines Manipulators mit Doppel- bzw. Mehrfachgreiferfunktion umfasst der Manipulator mindestens zwei Klemmgreifer mit jeweils zwei gegeneinander zustellbaren Klemmbacken. Zum Erfassen von Stückgütern von mindestens zwei benachbarten Reihen, sind die mindestens zwei Klemmgreifer derart ausgerichtet, dass die Klemmbacken parallel zur Transportrichtung ausgerichtet sind. Vorzugsweise kann der Abstand zwischen den mindestens zwei Klemmgreifern nach Abgreifen der Stückgüter von den mindestens zwei Reihen verändert werden kann, so dass der Abstand zwischen den erfassten Stückgütern in der Zielposition gegenüber der Ausgangsposition verändert werden kann. Weiterhin kann vorgesehen sein, dass die mindestens zwei Klemmgreifer unabhängig voneinander drehbar am Manipulator befestigt sind, so dass die Ausrichtung der Stückgüter der mindestens zwei Reihen relativ zueinander in der Zielposition gegenüber der Ausrichtung der Stückgüter der mindestens zwei Reihen auf den zuführenden Transporteinrichtungen verändert werden kann.

Gemäß einer zweiten Ausführungsform eines Manipulators mit Doppel- bzw. Mehrfachgreiferfunktion umfasst dieser einen Klemmgreifer mit zwei gegeneinander zustellbaren Klemmbacken, die derart weit voneinander beabstandet werden können, dass zwischen den Klemmbacken mindestens zwei Stückgüter von mindestens zwei nebeneinander angeordneten Reihen erfasst werden können. Anschließend werden die Klemmbacken des Klemmgreifers gegeneinander zugestellt, bis die mindestens zwei Stückgüter der mindestens zwei benachbarten Reihen einander kontaktieren und sicher zwischen den beiden Klemmbacken des Klemmgreifers geklemmt sind. Die mindestens zwei Stückgüter können nunmehr gemeinsam in eine Zielposition und/oder Zielausrichtung verbracht werden. Dabei können die mindestens zwei Stückgüter nur gemeinsam gedreht werden. Zudem ist mit einem solchen Manipulator kein definierter Abstand zwischen den aus mindestens zwei unterschiedlichen Reihen stammenden, gleichzeitig erfassten Stückgütern in der Zielposition eingestellt werden. Diese sind in der Zielposition insbesondere immer einander kontaktierend angeordnet.

Die Vorrichtung kann alternativ oder zusätzlich zu den beschriebenen Merkmalen ein oder mehrere Merkmale und/oder Eigenschaften des Verfahrens sowie der nachfolgend detailliert beschriebenen unterschiedlichen Verfahrensvarianten umfassen. Ebenfalls kann das Verfahren alternativ oder zusätzlich einzelne oder mehrere Merkmale und/oder Eigenschaften der beschriebenen Vorrichtung aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Anordnung einer automatisierten Positionserkennung und/oder Kalibrierung innerhalb eines Gruppiermoduls.
Figuren 2 bis 6 zeigen ein Verfahren zur Positionserkennung und/oder Kalibrierung vermittels einer ersten Anordnung gemäß Fig. 1.
Fig. 7 zeigt eine nicht erfindungsgemäße Anordnung einer automatisierten Positionserkennung und/oder Kalibrierung innerhalb eines Gruppiermoduls.
Figuren 8 bis 9 zeigen ein nicht erfindungsgemäßes Verfahren zur Positionserkennung und/oder Kalibrierung vermittels einer zweiten Anordnung gemäß Fig. 7.
Figuren 10 bis 12 zeigen eine dritte Anordnung einer automatisierten Positionserkennung und/oder Kalibrierung innerhalb eines Gruppiermoduls.
Fig. 13 zeigt eine vierte Anordnung einer automatisierten Positionserkennung und/oder Kalibrierung innerhalb eines Gruppiermoduls.
Fig. 14 zeigt das zeitgleiche Abgreifen von Stückgütern von Parallelreihen vermittels einer zweiten Ausführungsform eines Manipulators.
Figuren 15 und 16 zeigen das zeitgleiche Abgreifen von Stückgütern von Parallelreihen vermittels einer weiteren, nicht erfindungsgemäße Ausführungsform eines Manipulators.

Für gleiche oder gleich wirkende Elemente der Erfindung werden identische Bezugszeichen verwendet. Teilweise werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

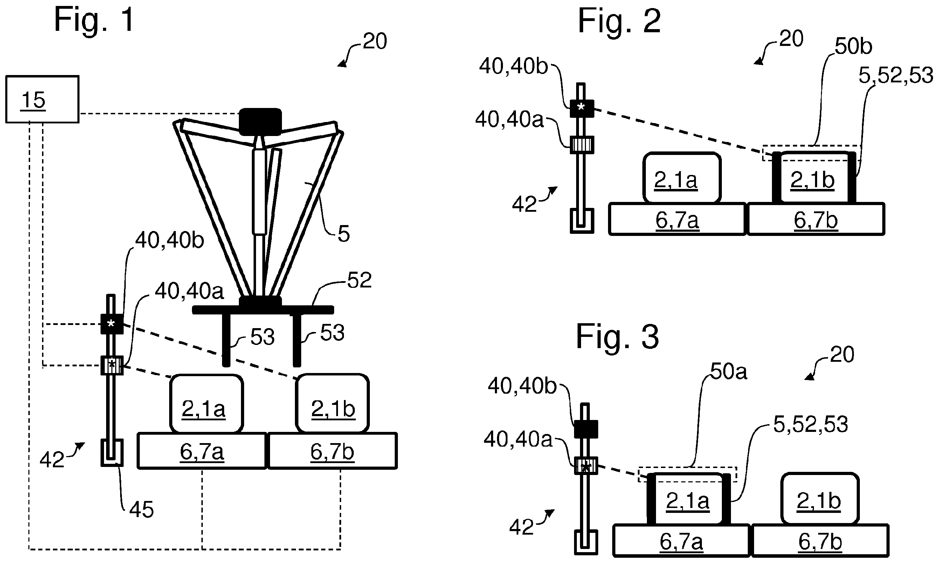

Die schematische Ansicht der Fig. 1 zeigt eine erste Anordnung einer automatisierten Positionserkennung und/oder Kalibrierung innerhalb eines Gruppiermoduls 20 und Figuren 2 bis 6 zeigen ein Verfahren zur Positionserkennung und/oder Kalibrierung vermittels einer ersten Anordnung gemäß Fig. 1 innerhalb eines Gruppiermoduls 20 einer Handhabungsvorrichtung 10. Hierbei werden Stückgüter 2 in zwei parallelen Reihen 1, 1a, 1b zu dem Gruppiermodul 20 zugeführt. Bei den Stückgütern 2 handelt es sich im dargestellten Ausführungsbeispiel jeweils um Gebinde umfassend eine Mehrzahl von Getränkebehältern, die beispielsweise mit einer Schrumpfverpackung zusammengehalten werden.

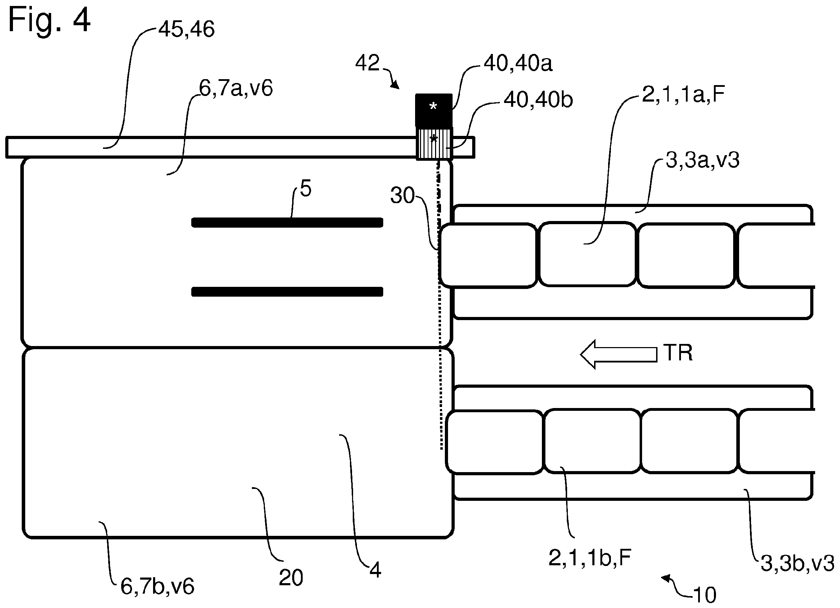

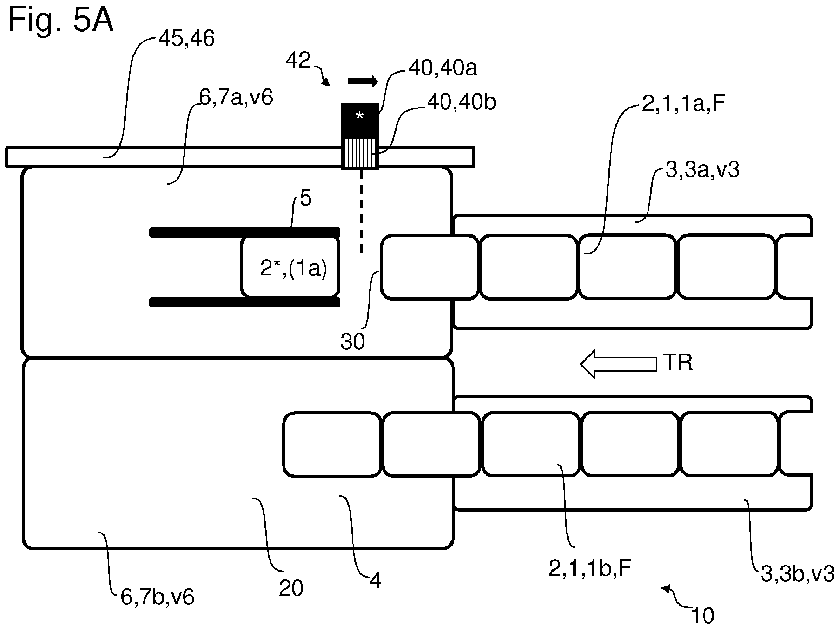

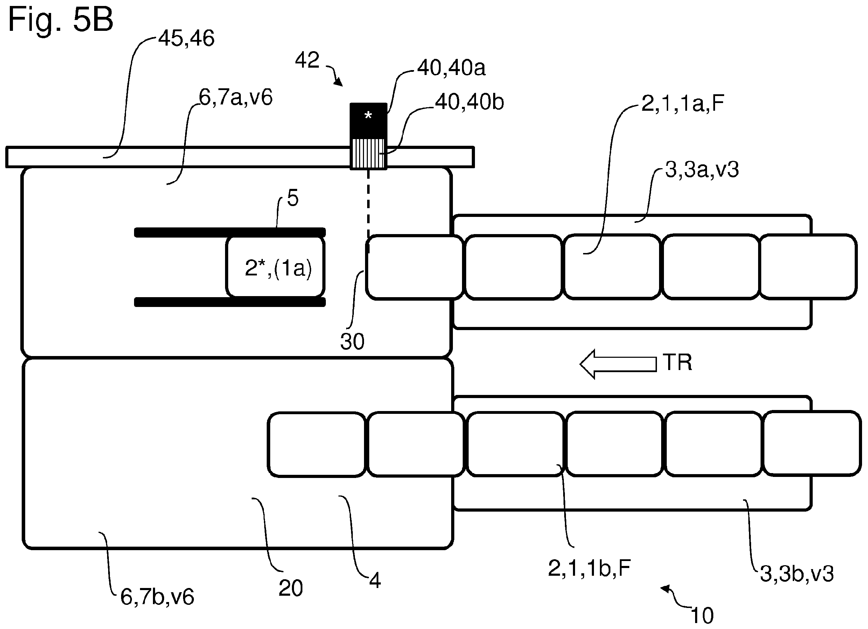

Die Handhabungsvorrichtung 10 umfasst zwei parallel angeordnete Transporteinrichtungen 3, 3a, 3b, über welche vorzugsweise unmittelbar aufeinanderfolgende Stückgüter 2 in zwei parallelen Reihen 1, 1a, 1b in Transportrichtung TR unterbrechungsfrei und/oder mit im Wesentlichen kontinuierlicher Transportgeschwindigkeit v3 in einen Erfassungsbereich 4 mindestens eines beweg-, verschieb- und/oder rotierbaren Manipulators 5 der Handhabungsvorrichtung 10 transportiert werden. Insbesondere ist vorgesehen, dass den zwei parallelen Transporteinrichtungen 3a, 3b genau ein Erfassungsbereich 4 nur eines einzelnen Manipulators 5 der Handhabungsvorrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 vorzugsweise keine bzw. nur eine geringfügige, gegebenenfalls prozessbedingte, Lücke besteht. Die Stückgüter 2 laufen somit in jeder der Reihen 1a, 1b jeweils in einer sogenannten geschlossenen Formation F in den Erfassungsbereich 4 des Manipulators 5 ein (vgl. Figuren 4 und 5).

Jeder der beiden zuführenden Transporteinrichtungen 3, 3a, 3b kann ein eigener Antrieb zugeordnet sein, so dass die beiden Transporteinrichtungen 3a, 3b unabhängig voneinander geregelt werden können. In der Regel werden die beiden Transporteinrichtung 3a, 3b mit derselben konstanten Geschwindigkeit v3 betrieben, bei einer Unregelmäßigkeit in der lückenlosen Zufuhr der Stückgüter 2 kann dies durch ein kurzzeitiges Anpassen der jeweiligen Bandgeschwindigkeit bspw. korrigiert werden.

In dem Gruppiermodul 20 sind zwei parallele Horizontalfördereinrichtungen 6, beispielsweise ein erstes Gruppierband 7a und ein zweites Gruppierband 7b angeordnet und insbesondere dem Erfassungsbereich 4 des Manipulators 5 zugeordnet. Die auf der ersten Transporteinrichtung 3a herangeführten Stückgüter 2 werden auf das erste Gruppierband 7a überführt und weiter transportiert und die auf der zweiten Transporteinrichtung 3b herangeführten Stückgüter 2 werden auf das zweite Gruppierband 7b überführt und weiter transportiert. Jedem der beiden Gruppierbänder 7a, 7b ist ein eigener Antrieb zugeordnet, so dass die beiden Gruppierbänder 7a, 7b unabhängig voneinander und/oder unabhängig von den jeweils zuführenden Transporteinrichtungen 3a, 3b geregelt werden können. In der Regel werden die beiden Gruppierbänder 7a, 7b mit derselben konstanten Geschwindigkeit v6 betrieben, bei einer Unregelmäßigkeit in der lückenlosen Zufuhr der Stückgüter 2 kann dies durch ein kurzzeitiges Anpassen der jeweiligen Bandgeschwindigkeit bspw. korrigiert werden. In der Regel werden die Transporteinrichtungen 3a und/oder 3b jeweils synchron mit dem in einer Flucht angeordneten Gruppierband 7a, 7b angesteuert und reguliert.

Der Manipulator 5 ist zum klemmenden und/oder kraft- und/oder formschlüssigen Entgegennehmen von Stückgütern 2 innerhalb des Erfassungsbereichs 4 des Gruppiermoduls 20 ausgebildet. Insbesondere werden durch den Manipulator 5 die in geschlossener Formation F einlaufenden Stückgüter 2 gemäß einem vorgegebenen Lagenschema auf der Horizontalfördereinrichtung 6 angeordnet, wobei die Stückgüter 2 entsprechend ihrer gewünschten Anordnung innerhalb des zu erstellenden Lagenschemas gegebenenfalls gedreht werden (nicht dargestellt). In einem nachfolgenden Verfahrensschritt kann es notwendig sein, die Stückgüter 2 der gemäß des Lagenschemas vorbereiteten Lage zusammen zu schieben und eine kompakte Lage zu bilden, die anschließend palettiert werden kann (nicht dargestellt).

Der Manipulator umfasst beispielsweise einen Klemmgreifer 52 mit zwei gegeneinander zustellbaren Klemmbacken 53, die ein schnelles Erfassen, Verschieben, Positionieren, Anheben und Freigeben der Stückgüter 2, 2* in der gewünschten Geschwindigkeit mit der gewünschten Stellpräzision erlauben. Bspw. kann der Manipulator als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sein, wie sie beispielsweise in der Anmeldung mit dem Aktenzeichen DE 10 2016 206 639.0 beschrieben worden ist.

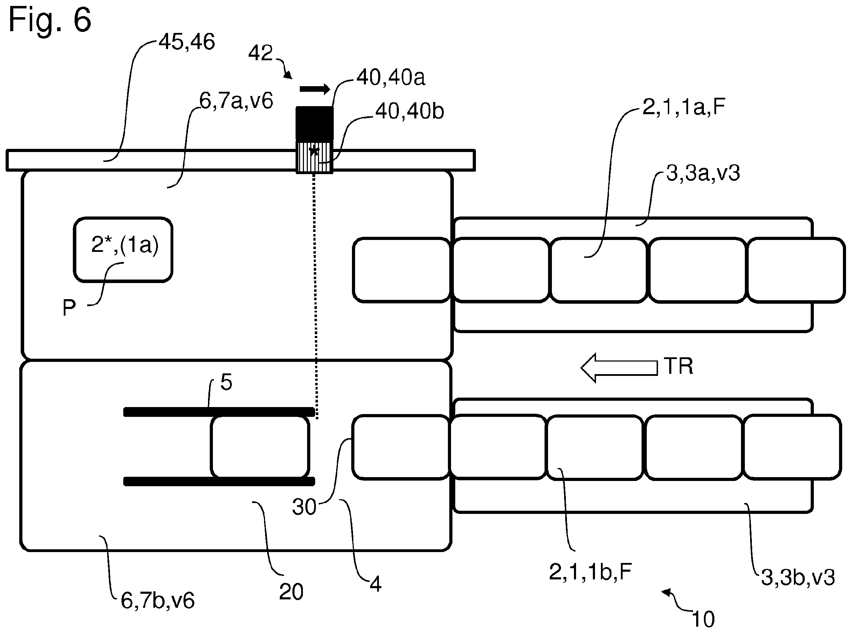

Das mindestens eine vom Manipulator 5 erfasste Stückgut 2 wird nachfolgend auch mit dem Bezugszeichen 2* gekennzeichnet. Beispielsweise greift der Manipulator 5 im Erfassungsbereich 4 mindestens ein Stückgut 2 von der über die ersten Transporteinrichtung 3a einlaufenden geschlossenen Reihe 1a bzw. Formation F, trennt dieses von den nachfolgenden Stückgütern 2 der Reihe 1a ab (Fig. 5A) und überführt das abgetrennte Stückgut 2* bzw. eine abgetrennte Gruppe bzw. Takt von mindestens zwei lückenlos in Reihe angeordneten Stückgütern in eine Zielposition P und/oder Zielausrichtung (vgl. Fig. 6). Dabei wird die das Stückgut 2* durch den Manipulator 5 in Transportrichtung TR von der Formation F der Stückgüter 2 der Reihe 1a beabstandet, zudem kann das Stückgut 2* gegenüber den Stückgütern 2 der Formation F verdreht werden o.ä. Beim Verbringen des mindestens einen durch den Manipulator erfassten Stückgutes 2* kann es vorteilhaft und/oder notwendig sein, dass Stückgut 2* zumindest kurzzeitig anzuheben.

Im Gruppiermodul 20 wird jeweils mindestens ein Stückgut 2 oder eine Gruppe bzw. ein sogenannter Takt umfassend mindestens zwei Stückgüter 2 durch den Manipulator 5 gegriffen und verschoben, angehoben und/oder gedreht o.ä., um eine palettierfähige Lage oder eine Vorgruppierung für eine palettierfähige Lage zu bilden (nicht dargestellt). Alternativ kann der Manipulator 5 auch als Dreh- und Verteilsystem dienen, um die in mindestens zwei Reihen 1a, 1b einlaufenden Stückgüter 2 für die nachfolgende Bearbeitung auf mehr oder weniger Transportspuren zu verteilen und dabei gegebenenfalls um beispielsweise 90° zu verdrehen.

Damit der Manipulator 5 das jeweilige Stückgut 2 bzw. den jeweiligen Takt korrekt greifen kann, ist es notwendig, die genaue Position des mindestens einen abzugreifenden Stückgutes 2 innerhalb des Gruppiermoduls 20 zu kennen. Die Positionserkennung der Stückgüter 2 jeder Reihe 1a, 1b erfolgt mit Hilfe mindestens eines vorzugsweise beweglichen Sensors 40. Dabei kann es sich beispielsweise um eine beweglich ausgebildete und/oder angeordnete Lichtschranke, einen beweglich ausgebildeten und/oder angeordneten Laserkantenscanner oder einen anderes geeignetes beweglich ausgebildetes und/oder angeordnetes optisches Detektionsmittel handeln, das geeignet ist, bestimmte Parameter eines Stückgutes 2 und/oder bestimmte Parameter eines Taktes von Stückgütern 2 auf optischem Wege zu erkennen.

Bei dem in den Figuren 1 bis 6 dargestellten Ausführungsbeispiel sind zwei bewegliche Sensoren 40a, 40b vorgesehen, wobei der bewegliche Sensor 40a derart angeordnet, eingestellt und/oder ausgebildet ist, dass dieser jeweils Parameter der über die erste Transporteinrichtung 3a auf das erste Gruppierband 7a einlaufenden Stückgüter 2 erkennt, während der bewegliche Sensor 40b derart angeordnet, eingestellt und/oder ausgebildet ist, dass dieser jeweils Parameter der über die zweite Transporteinrichtung 3b auf das zweite Gruppierband 7b einlaufenden Stückgüter 2 erkennt. Insbesondere erkennen die beiden Sensoren 40a, 40b jeweils die Vorderkante 30 eines jeweilig in ihren Erkennungsbereich 50a, 50b einlaufenden Stückgutes 2 (vgl. Figuren 2 und 3).

Die beweglichen Sensoren 40a, 40b sind insbesondere in einem Bewegungsbereich 45 parallel zur Transportrichtung TR der Stückgüter 2 bzw. der Takte von jeweils mindestens zwei gruppierten Stückgütern 2 auf oder parallel zu der Horizontalfördereinrichtung 6 des Gruppiermoduls 20 beweglich. Der Bewegungsbereich 45 wird durch einen Anfangspunkt und einen Endpunkt begrenzt und definiert somit den Erkennungsbereich der Sensoren 40a, 40b. Die Sensor 40a, 40b sind beispielsweise auf einem Laufschlitten angeordnet, der über eine Laufschiene, einen Zahnriemenantrieb o.ä. parallel zur Transportrichtung TR der Stückgüter 2 bzw. Takte zwischen dem Anfangspunkt und dem Endpunkt innerhalb des Bewegungsbereiches 45 verfahren werden können. Die Sensor 40a, 40b sind insbesondere nicht mechanisch an den Manipulator 5 gekoppelt. Weiterhin ist die Beweglichkeit der Sensoren 40a, 40b nicht an die Beweglichkeit des Manipulators 5 gekoppelt. Bei dem hier dargestellten Ausführungsbeispiel sind die beiden Sensoren 40a, 40b auf einer gemeinsamen Linearachse angeordnet und bilden eine Sensoranordnung 42. Die beiden Sensoren 40a, 40b werden innerhalb des Bewegungsbereichs 45 jeweils gemeinsam in Transportrichtung TR oder entgegen der Transportrichtung TR bewegt. Insbesondere weist die Anordnung der Sensoren 40a, 40b einen eigenen Antrieb auf, über den die Sensoren 40a, 40b vorzugsweise parallel zur Transportrichtung TR der einlaufenden Stückgüter 2 oder entgegen der Transportrichtung TR der einlaufenden Stückgüter 2 bewegt werden können.

Die beweglichen Sensoren 40a, 40b erkennen mindestens einen bestimmten Parameter des zuvorderst in den Erkennungsbereich einlaufenden Stückgutes 2 der jeweilig dem Sensor 40a, 40b zugeordneten Reihe 1a, 1b. Beispielsweise erkennen die Sensoren 40a, 40b jeweils eine Vorderkante 30 des jeweilig vorauslaufenden Stückgutes 2 der zugeordneten Reihe 1a, 1b.

Die Sensoren 40a, 40b können jeweils immer nur zeitweise aktiv sein, um entsprechende Daten zu erfassen und an eine Steuerungseinrichtung 15 zu übermitteln (vgl. Fig. 1). Ein aktiv geschalteter Sensor 40a, 40b ist jeweils durch einen Stern * gekennzeichnet. Die Figuren 2 und 3 lassen erkennen, dass spätestens beim Abgreifen eines Stückgutes 2 einer Reihe 1b gemäß Fig. 2 oder einer Reihe 1a gemäß Fig. 3 durch den Manipulator 5 der jeweilig der Reihe 1a, 1b zugeordnete Sensor 40a, 40b aktiv geschaltet wird, um direkt im Anschluss an das Abtrennen des mindestens einen Stückgutes 2 durch den Manipulator 5 die Vorderkante 30 (vgl. die Figuren 5A und 5B) des nunmehr vordersten Stückgutes 2 der jeweiligen Reihe 1a, 1b und somit die genaue Position des nachfolgenden vordersten Stückgutes 2 der Reihe 1a, 1b, von der gerade abgegriffen worden ist, innerhalb des Gruppiermoduls 20 zu ermitteln. Die derart erfassten Daten werden an die Steuerungseinrichtung 15 übermittelt und von dieser verwendet, um beispielsweise bei Abweichung der Ist- Position des vordersten Stückgutes 2 der jeweiligen Reihe 1a, 1b von einer Soll- Position, eine Korrektur des vorprogrammierten Bewegungsablaufes des Manipulators 5 zu berechnen. Alternativ und/oder zusätzlich können aufgrund der erfassten Daten auch die jeweilige Transporteinrichtung 3a, 3b und/oder das jeweilige Gruppierband 7a, 7b angesteuert und reguliert werden, um gegebenenfalls einen ermittelten Versatz zwischen der Ist- Position des zuvordersten Stückgutes 2 und einer vordefinierten Soll- Position auszugleichen. In der Darstellung der Fig. 2 ist der Sensor 40b aktiv, um nach Abgreifen mindestens eines Stückgutes 2 der Reihe 1b durch den Manipulator 5 die Position des nunmehr zuvorderst angeordneten Stückgutes 2 der Reihe 1b zu ermitteln. In der Darstellung der Fig. 3 ist dagegen der Sensor 40a aktiv, um nach Abgreifen mindestens eines Stückgutes 2 der Reihe 1a durch den Manipulator 5 die Position des nunmehr zuvorderst angeordneten Stückgutes 2 der Reihe 1a zu ermitteln.

Anhand der Figuren 4 bis 6 wird nunmehr ein Verfahren zur Positionserkennung von Stückgütern 2 beim Start eines Produktionsablaufes und innerhalb eines Produktionsablaufes erklärt. Die Sensoren 40a, 40b sind beim Produktionsstart im Wesentlichen unmittelbar benachbart zu einem Übergangsbereich zwischen den zwei Transporteinrichtungen 3a, 3b und den fluchtenden Gruppierbändern 7a, 7b angeordnet. Beim Produktionsstart werden die Vorderkanten 30 der jeweils ersten Stückgüter 2 jeder Reihen 1a, 1b durch den jeweiligen aktiven Sensor 40a, 40b erfasst. Wenn wie beispielsweise in Fig. 4 dargestellt, senkrecht zur Transportrichtung TR ein Versatz zwischen den jeweilig zuvorderst angeordneten Stückgütern 2 der beiden Reihen 1a, 1b ermittelt wird, werden die Transporteinrichtungen 3a und/oder 3b sowie die jeweilig fluchtenden Gruppierbänder 7a, 7b durch die Steuerungseinrichtung 15 (vgl. Fig. 1) derart reguliert, dass die zuvorderst einlaufenden Stückgüter 2 der beiden Reihen 11, 1b senkrecht zur Transportrichtung TR gleichauf angeordnet in das Gruppiermodul 20 einlaufen. Spätestens mit dem Abgreifen eines Stückgutes 2 von der Reihe 1a wird der zugeordnete Sensor 40a aktiviert, was durch die Kennzeichnung mit einem Stern * verdeutlicht wird (vgl. Fig. 5A). Der andere Sensor 40b ist zu diesem Zeitpunkt vorzugsweise inaktiv. Die Sensoranordnung 42 umfassend die beiden Sensoren 40a, 40b wird nunmehr entgegen der Transportrichtung TR bewegt, bis der Sensor 40a die Vorderkante 30 des nunmehr zuvordersten Stückgutes 2 der Reihe 1a erfasst (vgl. Fig. 5B).

Währenddessen wird das durch den Manipulator 5 erfasste Stückgut 2* der Reihe 1a in eine Zielposition P und/oder Zielanordnung befördert (vgl. Fig. 6). Aufgrund der ermittelten Position des nunmehr zuvordersten Stückgutes 2 der Reihe 1a kann gegebenenfalls der Bewegungsablauf des Manipulators 5 für einen nachfolgenden Verfahrensschritt korrigiert werden, sofern eine Abweichung zwischen der Ist- Position des zuvordersten Stückgutes 2 der Reihe 1a und einer vorbekannten Soll- Position ermittelt worden ist. Gegebenenfalls kann auch eine Anpassung der Position des zuvordersten Stückgutes 2 der Reihe 1a durch eine Steuerung der Geschwindigkeiten der Transporteinrichtung 3a und/oder des Gruppierbandes 7a erfolgen.

Nachdem die Ist- Position des zuvordersten Stückgutes 2 der Reihe 1a durch den Sensor 40a ermittelt worden ist, wird die Sensoranordnung 42 in Transportrichtung TR auf eine Position bewegt, die sich in Transportrichtung TR vor der Soll- Position eines Stückgutes 2 der Reihe 1b befindet, welches nach Abgreifen mindestens eines Stückgutes 2 der Reihe 1b durch den Manipulator 5 das nächste zuvorderste Stückgut 2 der Reihe 1b bilden wird (vgl. Fig. 6). Nachdem der Manipulator 5 mindestens ein Stückgut 2 der Reihe 1b erfasst und von der Reihe 1b abgetrennt hat, wird die Sensoranordnung 42 mit dem nunmehr aktiven Sensor 40b entgegen der Transportrichtung TR bewegt, bis die Vorderkante 30 des nunmehr zuvordersten Stückgutes 2 der Reihe 1b erfasst wird usw. Vorzugsweise ist immer nur der Sensor 40a oder 40b aktiv, der jeweils der Reihe 1a oder 1b zugeordnet ist, von der der Manipulator 5 gerade mindestens ein Stückgut 2 abgreift, um jeweils die Position der Vorderkante 30 des neuen zuvordersten Stückgutes 2 der jeweiligen Reihe 1a, 1b innerhalb des Gruppiermoduls 20 zu ermitteln und gegebenenfalls den Bewegungsablauf des Manipulators 5 und/oder der Fördereinrichtungen der Handhabungsvorrichtung 10, insbesondere der Transporteinrichtungen 3a, 3b und/oder der Gruppierbänder 7a, 7b anzupassen und/oder zu korrigieren.

Bei der hier dargestellten Ausführungsform einer Sensoranordnung 42 ist vorzugsweise vorgesehen, dass der Sensor 40a, der unmittelbar benachbart zum Gruppierband 7a angeordnet ist, in einem ersten Höhenniveau oberhalb der durch die Gruppierbänder 7a, 7b gebildeten Förderfläche für die Stückgüter 2 angeordnet ist. Dagegen ist der Sensor 40b zur Erfassung von Stückgütern 2 auf dem durch das Gruppierband 7a beabstandeten Gruppierband 7b in einem zweiten, insbesondere höheren, Höhenniveau oberhalb der Förderfläche angeordnet. Die Anordnung in unterschiedlichen Höhenniveaus und/oder mit unterschiedlichen Erkennungsbereichen 50a, 50b und/oder Erfassungswinkeln ist insbesondere vorteilhaft, um sicherzustellen, dass die Sensoren 40a, 40b jeweils nur die Vorderkanten 30 der Stückgüter 2 der jeweils zugeordneten Reihen 1a, 1b erfassen. Dies ist insbesondere notwendig, um Fehler in der Zuordnung zu vermeiden.

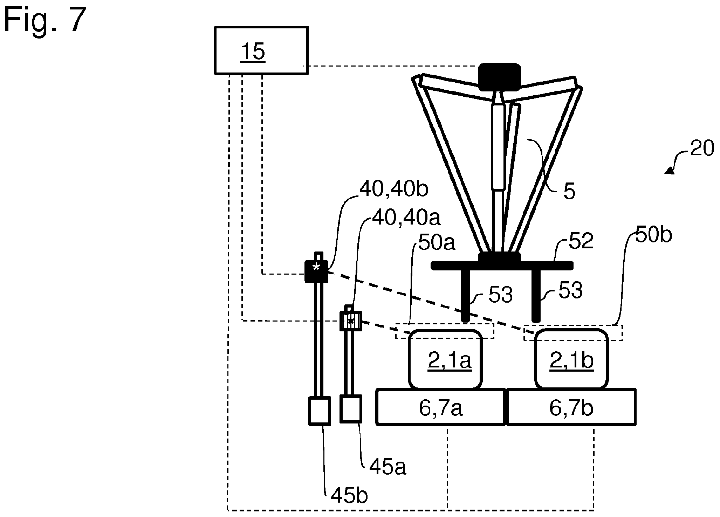

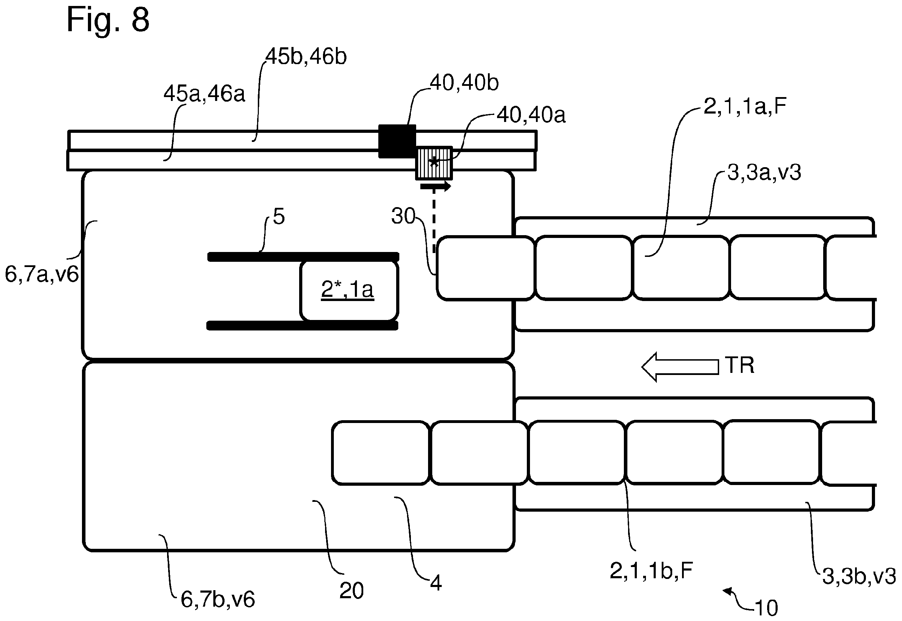

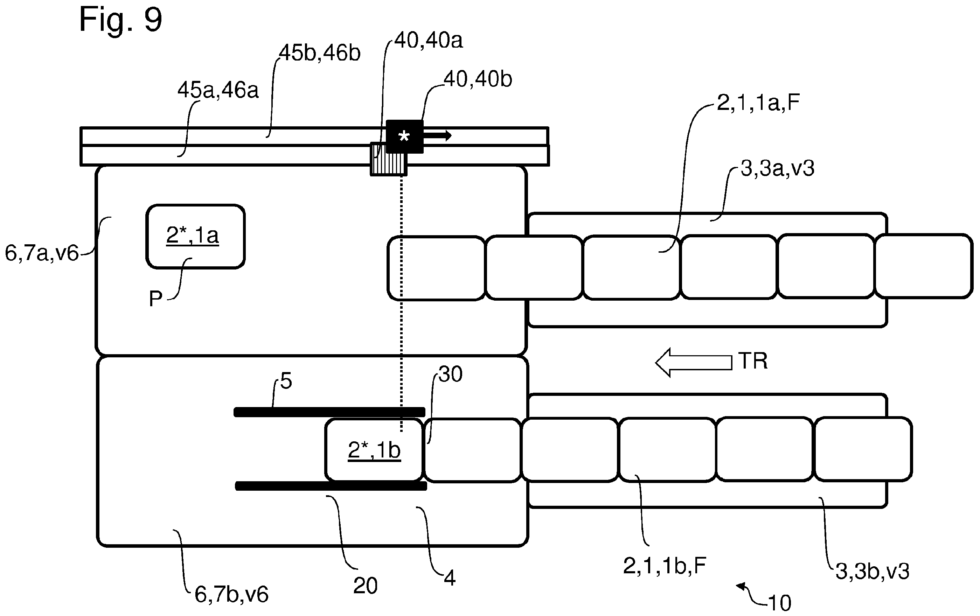

Die schematische Darstellung der Fig. 7 zeigt eine nicht erfindungsgemäße Anordnung einer automatisierten Positionserkennung und/oder Kalibrierung innerhalb eines Gruppiermoduls 20 und Figuren 8 bis 9 zeigen ein Verfahren zur Positionserkennung und/oder Kalibrierung vermittels einer zweiten Anordnung gemäß Fig. 7. Bei dem hier dargestellten Ausführungsbeispiel sind wiederum zwei bewegliche Sensoren 40a, 40b vorgesehen. Es wird nachfolgend im Wesentlichen nur auf die Unterschiede zu dem in den Figuren 1 bis 6 dargestellten Ausführungsbeispiel eingegangen. In Bezug auf die allgemeine Beschreibung der Handhabungsvorrichtung 10 wird auf die Figurenbeschreibung zu den Figuren 1 bis 6 verwiesen.

Bei dem in den Figuren 7 bis 9 gezeigten nicht erfindungsgemäßen Ausführungsbeispiel sind die beweglichen Sensoren 40a, 40b derart angeordnet, eingestellt und/oder ausgebildet ist, dass der Sensor 40a jeweils Parameter der über die erste Transporteinrichtung 3a auf das erste Gruppierband 7a einlaufenden Stückgüter 2 erkennt, während der bewegliche Sensor 40b jeweils Parameter der über die zweite Transporteinrichtung 3b auf das zweite Gruppierband 7b einlaufenden Stückgüter 2 erkennt. Insbesondere erkennen die beiden Sensoren 40a, 40b jeweils die Vorderkante 30 eines jeweilig in ihren Erkennungsbereich einlaufenden Stückgutes 2.

Bei dem hier dargestellten Ausführungsbeispiel sind die beiden Sensoren 40a, 40b jeweils auf einer eigenen Linearachse angeordnet, so dass die beiden Sensoren 40a, 40b jeweils unabhängig voneinander innerhalb ihres jeweiligen, durch die jeweilige Laufschiene 46a, 46b definierten Bewegungsbereichs 45a, 45b parallel zur und in Transportrichtung TR oder entgegen der Transportrichtung TR bewegt werden können. Beide Sensoren 40a, 40b sind im Bereich einer Längsseite der Horizontalfördereinrichtung 6 parallel zur Transportrichtung TR angeordnet.

Die schematische Ansicht der Fig. 8 zeigt das Abgreifen eines Stückgutes 2* der Reihe 1a und Abtrennen desselben durch eine Bewegung mit einer Bewegungskomponente in Transportrichtung TR und einer gegenüber der Fördergeschwindigkeit v6 des Gruppierbandes 7a erhöhten Geschwindigkeit durch den Manipulator 5 sowie das Erfassen der Ist- Position eines nunmehr zuvordersten Stückgutes 2 der Reihe 1a durch den Sensor 40a, indem dieser vorzugsweise entgegen der Transportrichtung TR bewegt wird, bis er die Vorderkante 30 des nunmehr zuvordersten Stückgutes 2 der Reihe 1a erfasst. Anschließend kann der Sensor 40a beispielsweise gemeinsam mit dem zuvordersten Stückgutes 2 der Reihe 1a mit einer Geschwindigkeit v6 in Transportrichtung bewegt werden, bis dieses und gegebenenfalls nachfolgende Stückgüter 2 der Reihe 1a durch den Manipulator 5 erfasst und von der Reihe 1a abgetrennt wird/werden, woraufhin der Sensor 40a wieder entgegen der Transportrichtung TR bewegt wird, um die Vorderkante 30 des neuen zuvordersten Stückgutes 2 der Reihe 1a zu ermitteln.

Der zweite Sensor 40b befindet sich in einer Position senkrecht zur Vorderkante 30 des zuvordersten Stückgutes 2 der Reihe 1b oder aber zumindest in einer Position, die sich in Transportrichtung vor einem Stückgut 2 der Reihe 1b befindet, dass nach Abgreifen mindestens eines Stückgutes 2 von der Reihe 1b das nächste zuvorderste Stückgut 2 der Reihe 1b bilden wird. Beim Erfassen mindestens eines Stückgutes 2 der Reihe 1b durch den Manipulator 5 wird der Sensor 40b aktiviert und nach Abtrennen des mindestens eines Stückgutes 2* von der Reihe 1b durch den Manipulator 5 wird der Sensor 40b entgegen der Transportrichtung TR bewegt, um die genaue Position der Vorderkante 30 des nächsten zuvordersten Stückgutes 2 der Reihe 1b zu ermitteln.

Wie insbesondere in Fig. 7 dargestellt, sind auch bei diesem Ausführungsbeispiel die beiden Sensoren 40a, 40b vorzugsweise in unterschiedlichen Höhenniveaus oberhalb der Förderfläche für die Stückgüter 2 angeordnet, um eine korrekte Positionsermittlung aufgrund unterschiedlicher Erkennungsbereiche 50a, 50b und/oder Erfassungswinkel zu ermöglichen.

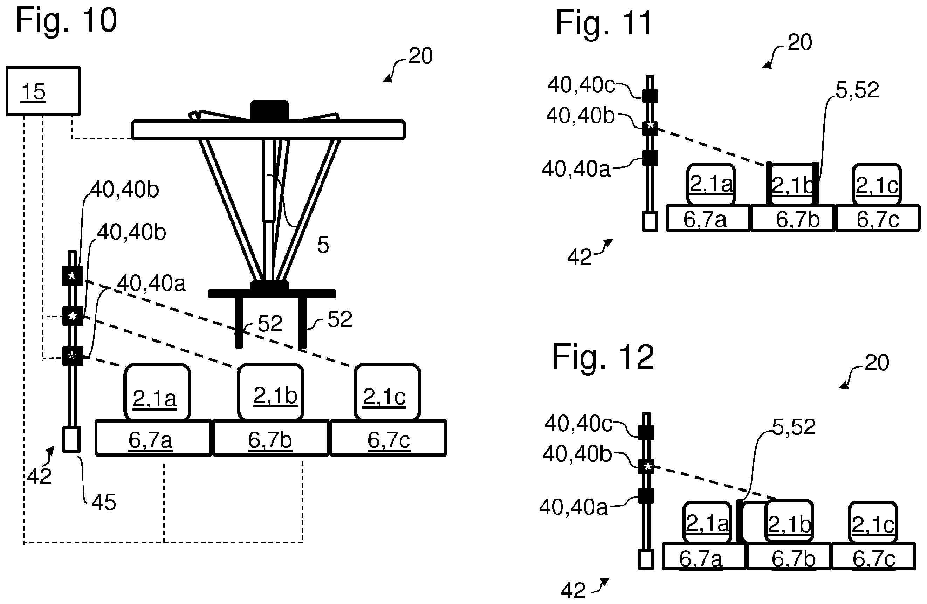

Die schematischen Ansichten Figuren 10 bis 12 zeigen eine dritte Anordnung einer automatisierten Positionserkennung und/oder Kalibrierung innerhalb eines Gruppiermoduls 20 einer Handhabungsvorrichtung 10. Das Gruppiermodul 20 umfasst einen Manipulator 5 zum Bearbeiten von Stückgütern 2, die in drei Reihen 1a, 1b, 1c über drei Transporteinrichtungen 3a, 3b, 3c dem Gruppiermodul 20 zugeführt werden und innerhalb des Gruppiermoduls 20 auf drei Gruppierbändern 7a, 7b, 7c weitergeführt werden. Hierbei sind drei Sensoren 40a, 40b, 40c in unterschiedlichen Höhenniveaus an einem parallel zur Transportrichtung TR seitlich neben dem Gruppierband 7a angeordneten Linearantrieb angeordnet. Zur Arbeitsweise des Manipulators 5 und der Positionserkennen durch die Sensoren 40a, 40b, 40c sowie der daran anschließenden Positionskorrektur bzw. Korrektur des Bewegungsablaufs des Manipulators wird insbesondere auf die Beschreibung zu den Figuren 1 bis 6 verwiesen. Auch in diesem Fall wäre ein alternatives Ausführungsbeispiel gemäß den Figuren 7 bis 9 denkbar, bei dem alle drei Sensoren 40a, 40b, 40c an einer Längsseite des Gruppiermoduls 20 parallel zur Transportrichtung TR beweglich angeordnet sind, wobei jedem Sensor 40a, 40b, 40c ein eigener Linearantrieb mit eigenem Bewegungsbereich 45 zugeordnet ist.

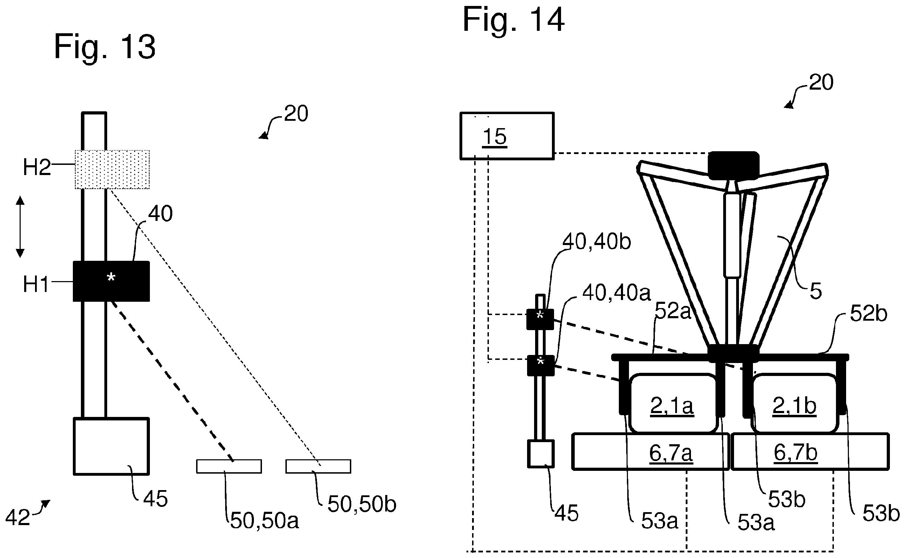

Die schematische Darstellung der Fig. 13 zeigt eine vierte Anordnung einer automatisierten Positionserkennung und/oder Kalibrierung innerhalb eines Gruppiermoduls 20. Die hier dargestellte Sensoranordnung 42 umfasst einen in der Höhe zur Förderfläche verstellbaren Sensor 40. Wenn der Manipulator 5 - so wie in allen bisher beschriebenen Ausführungsbeispielen - jeweils mindestens ein Stückgut 2 jeweils einer Reihe 1a, 1b oder 1c abgreift und somit die Reihen 1a, 1b oder 1c nie gleichzeitig abarbeitet, wird der Sensor in Abhängigkeit von dem Manipulator 5 abzugreifenden Stückgut 2 in einer Höhe positioniert, die das Erfassen den nunmehr zuvordersten Stückgutes 2 der entsprechenden Reihe 1a, 1b oder 1c ermöglicht. Die Anordnung in unterschiedlichen Höhenniveaus ermöglicht insbesondere eine Veränderung des Erkennungsbereiches 50. Beispielsweise deckt der Sensor 40 in einer ersten Höhe H1 einen Erkennungsbereich 50a ab, der dem der Sensoranordnung 42 direkt benachbarten Gruppierband 7a zugeordnet ist, so dass der in erster Höhe H1 angeordnete Sensor 40 jeweils die Vorderkante 30 von einlaufenden Stückgütern 2 der Reihe 1a erfassen kann (vgl. auch die Figuren 4 bis 6). Dagegen deckt der in einer zweiten Höhe H2 angeordnete Sensor 40 einen Erkennungsbereich 50b ab, der dem von der Sensoranordnung 42 beabstandet angeordneten Gruppierband 7b zugeordnet ist, so dass der in zweiter Höhe H2 angeordnete Sensor 40 jeweils die Vorderkante 30 von einlaufenden Stückgütern 2 der Reihe 1b erfassen kann. Ist eine dritte Reihe 1c vorhanden, so kann der Sensor 40 entsprechend in einer weiteren dritten Höhe angeordnet werden. Auch bei dieser Ausführungsform werden die ermittelten Sensordaten verwendet, um das Bewegungsprofil des Manipulators 5 anzupassen und/oder um die zuführenden Transporteinrichtungen und/oder die weiterführenden Gruppierbänder 7a, 7b der Horizontalfördereinrichtung 6 entsprechend zu korrigieren und/oder auszuregulieren.

Bei der Sensoranordnung 42 mit einem höhenverstellbaren Sensor 40, der beispielsweise an einem vertikalen Rahmenelement verschieblich angeordnet ist, kann auch vorgesehen sein, dass anstelle oder zusammen mit der Höhenverstellung eine Verstellung des Erfassungswinkels des Sensors 40 erfolgt, um den jeweiligen Erkennungsbereich 50 besser einstellen zu können.

Die schematische Darstellung der Fig. 14 zeigt eine alternative Ausführungsform eines Verfahrens zum Umgang mit ein mindestens zwei Reihen 1a, 1b zu einem Gruppiermodul zugeführten Stückgütern 2, wobei ein zeitgleiches Abgreifen von Stückgütern 2 aus beiden zuführenden parallelen Reihen 1a, 1b vermittels einer zweiten Ausführungsform eines Manipulators 5 erfolgt. Der Manipulator 5 ist insbesondere als Doppelgreifer ausgebildet und umfasst zwei Klemmgreifer 52a, 52b mit jeweils zwei gegeneinander zustellbaren Klemmbacken 53a, 53b. Hierbei kann vorgesehen sein, dass der Abstand zwischen den Klemmgreifern 52a, 52b nach Abgreifen der Stückgüter 2 von den beiden Reihen 1a, 1b verändert werden kann, so dass der Abstand zwischen den erfassten Stückgütern 2 in der Zielposition gegenüber der Ausgangsposition verändert ist. Weiterhin kann vorgesehen sein, dass die Klemmgreifer 52a, 52b unabhängig voneinander drehbar am Manipulator 5 befestigt sind, so dass die Ausrichtung der Stückgüter 2 der beiden Reihen 1a, 1b relativ zueinander in der Zielposition gegenüber der Ausrichtung der Stückgüter 2 der beiden Reihen 1a, 1b auf den zuführenden Transporteinrichtungen verändert werden kann. Auch bei Verwendung eines solchen Manipulators 5 mit Doppelgreifer kann es vorteilhaft sein, eine Ausführungsform mit separat beweglichen Sensoren 40a, 40b gemäß Figuren 7 bis 9 zu verwenden.

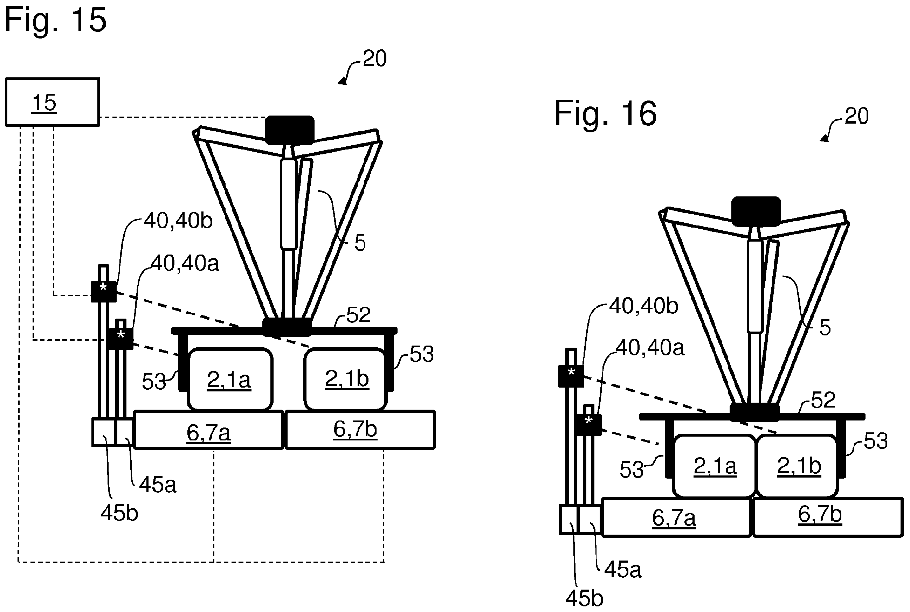

Die schematischen Darstellungen der Figuren 15 und 16 zeigen das zeitgleiche Abgreifen von Stückgütern von Parallelreihen 1a, 1b vermittels einer weiteren, nicht erfindungsgemäßen Ausführungsform eines Manipulators 5. Dieser umfasst ebenfalls einen Klemmgreifer 52 mit zwei gegeneinander zustellbaren Klemmbacken 53. Die Klemmbacken 53 können insbesondere derart weit voneinander beabstandet werden, dass zwischen den Klemmbacken 53 mindestens zwei Stückgüter 2 der nebeneinander angeordneten Reihen 1a, 1b gleichzeitig erfasst werden können (vgl. Fig. 15). Anschließend werden die Klemmbacken 53 gegeneinander zugestellt, bis die Stückgüter 2 der beiden benachbarten Reihen 1a, 1b einander kontaktieren, so dass die beiden nebeneinander zwischen den beiden Klemmbacken 53 angeordneten Stückgüter 2 der beiden Reihen 1a, 1b sicher geklemmt sind (vgl. Fig. 16). Diese können nunmehr gemeinsam in eine Zielposition und/oder Zielausrichtung verbracht werden. Dabei können die mindestens zwei Stückgüter 2 nur gemeinsam gedreht werden. Zudem ist mit einem solchen Manipulator 5 kein definierter Abstand zwischen den aus unterschiedlichen Reihen 1a, 1b stammenden, gleichzeitig erfassten Stückgütern 2 in der Zielposition einstellbar. Diese sind in der Zielposition insbesondere immer einander kontaktierend angeordnet.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren 1 bis 16 generell von "schematischen" Darstellungen und Ansichten die Rede ist, so ist damit keineswegs gemeint, dass die Figurendarstellungen hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren 1 bis 16 ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Es sei an dieser Stelle abschließend nochmals festgehalten, dass die Erfindung grundsätzlich unter Bezugnahme auf eine bevorzugte Ausführungsform bzw. auf mehrere bevorzugte Ausführungsformen beschrieben wurde. Es ist jedoch für einen Fachmann durchaus vorstellbar, dass Abwandlungen oder Änderungen der Erfindung gemacht werden können, ohne dabei den Schutzbereich der nachstehenden Ansprüche zu verlassen.

### Bezugszeichenliste

- 1; 1a, 1b, 1c: Reihe
- 2: Stückgut
- 2*: erfasstes Stückgut
- 3; 3a; 3b: Transporteinrichtung
- 4: Erfassungsbereich
- 5: Manipulator
- 6: Horizontalfördereinrichtung
- 7a, 7b, 7c: Gruppierband
- 10: Handhabungsvorrichtung
- 15: Steuerungseinrichtung
- 20: Gruppiermodul
- 30: Vorderkante
- 40; 40a, 40b: Sensor
- 42: Sensoranordnung
- 45; 45a, 45b: Bewegungsbereich
- 46: Laufschiene
- 50a; 50b: Erkennungsbereich
- 52, 52a, 52b: Klemmgreifer
- 53, 53a, 53b: Klemmbacke

- H1: erste Höhe
- H2: zweite Höhe
- P: Zielposition
- TR: Transportrichtung
- v3: Transportgeschwindigkeit
- v6: Geschwindigkeit / Fördergeschwindigkeit

## Patentansprüche

1. Vorrichtung (10) zum Umgang mit in mindestens zwei parallelen Reihen (1) bewegten Stückgütern (2), umfassend
- mindestens einen Manipulator (5) für Stückgüter (2),
- wenigstens zwei Transporteinrichtungen (3), über welche die bewegten Stückgüter (2) in einer Transportrichtung (TR) zu einem Erfassungsbereich (4) des mindestens einen Manipulators (5) transportierbar sind, sowie
- wenigstens eine dem Erfassungsbereich (4) und/oder einem Bewegungsraum des wenigstens einen Manipulators (5) zugeordnete bewegbare optische Erfassungseinrichtung (40), die zur Gewinnung von Raumkoordinaten und/oder Positions- und/oder Umrissdaten wenigstens eines in Transportrichtung (TR) bewegten Stückgutes (2) der wenigstens zwei Transporteinrichtungen (3) vorbereitet und ausgestattet ist,
- wobei zumindest der Manipulator (5) und/oder weitere Förderkomponenten der Vorrichtung (10) auf Grundlage der Raumkoordinaten und/oder Positions- und/oder Umrissdaten kalibrierbar und/oder steuerbar ist/sind
- wobei die mindestens eine optische Erfassungseinrichtung (40) zumindest temporär parallel beweglich zu einer dem Erfassungsbereich (4) zugeordneten Horizontalfördereinrichtung (6) ausgebildet ist
- wobei eine optische Erfassungseinrichtung (40) je Transporteinrichtung (3) vorgesehen ist,
- wobei mindestens zwei optische Erfassungseinrichtungen (40) im Bereich einer Längsseite der Horizontalfördereinrichtung (6) parallel zur Transportrichtung (TR) in oder entgegen der Transportrichtung (TR) beweglich angeordnet sind, **dadurch gekennzeichnet, dass**
- die mindestens zwei optischen Erfassungseinrichtungen (40) in unterschiedlichen Höhen oberhalb einer durch die Horizontalfördereinrichtung (6) gebildeten Förderfläche oder Förderebene für die Stückgüter (2) angeordnet sind,
- wobei die mindestens zwei optischen Erfassungseinrichtungen (40) im Bereich einer Längsseite der Horizontalfördereinrichtung (6) einen gemeinsamen Antrieb und einen gemeinsamen Bewegungsbereich (45) umfassen.

2. Vorrichtung (10) nach Anspruch 1, bei der die mindestens zwei im Bereich einer Längsseite der Horizontalfördereinrichtung (6) angeordneten optischen Erfassungseinrichtungen (40) jeweils unterschiedliche Erkennungsbereiche (50) im Erfassungsbereich (4) der Vorrichtung (10) abdecken, insbesondere wobei eine erste optische Erfassungseinrichtung einen ersten Erkennungsbereich im Erfassungsbereich (4) der Vorrichtung (10) fluchtend zu einer ersten der mindestens zwei Transporteinrichtungen (3) abdeckt, und wobei eine zweite optische Erfassungseinrichtung einen zweiten Erkennungsbereich im Erfassungsbereich (4) der Vorrichtung (10) fluchtend zu einer zweiten der mindestens zwei Transporteinrichtungen (3) abdeckt.

3. Vorrichtung (10) nach einem der voranstehenden Ansprüche, bei der die optische Erfassungseinrichtung (40) durch mindestens einen Kantenscanner gebildet ist, welcher der Steuer- und/oder Auswerteeinheit (15) Raumkoordinaten und/oder Positions- und/oder Umrissdaten für ein bewegtes Stückgut (2) der jeweilig zugeordneten Reihe (1) liefert, insbesondere Raumkoordinaten und/oder Positions- und/oder Umrissdaten für das jeweils zuvorderst befindliche Stückgut (2) der jeweilig zugeordneten Reihe (1) und/oder einer in Transportrichtung (TR) nach vorne oder nach hinten weisender Umrisskante (30) liefert oder bei der die optische Erfassungseinrichtung (40) durch mindestens eine Kamera mit nachgeschalteter Bildauswertung gebildet ist, aus deren Daten die Steuer- und/oder Auswerteeinheit (15) Raumkoordinaten und/oder Positions- und/oder Umrisswerte für ein bewegtes Stückgut (2) der jeweilig zugeordneten Reihe (1) gewinnt, insbesondere Raumkoordinaten und/oder Positions- und/oder Umrisswerte für das jeweils zuvorderst befindliche Stückgut (2) der jeweilig zugeordneten Reihe (1) und/oder dessen in Transportrichtung (TR) nach vorne oder nach hinten weisender Umrisskante (30) gewinnt.

4. Vorrichtung (10) nach einem der voranstehenden Ansprüche, wobei basierend auf den erfassten Raumkoordinaten und/oder Positions- und/oder Umrissdaten eine Aktivierung oder Inaktivierung der optischen Erfassungseinrichtung (40) auslösbar ist.

5. Vorrichtung (10) nach einem der Ansprüche 1 bis 3, wobei basierend auf der erfassten Raumkoordinaten und/oder Positions- und/oder Umrissdaten ein Mitführen der optischen Erfassungseinrichtung mit der Transporteinrichtung und/oder Horizontalfördereinrichtung auslösbar ist.

6. Vorrichtung (10) nach einem der voranstehenden Ansprüche, wobei die mindestens zwei über einen gemeinsamen Antrieb bewegungstechnische gekoppelten optischen Erfassungseinrichtungen (40) abwechselnd aktivierbar sind, um eine saubere Signaltrennung und korrekte Positionsdaten für die jeweils zuvordersten Stückgüter (2) der mindestens zwei Reihen (1) zu erhalten.

7. Vorrichtung (10) nach einem der voranstehenden Ansprüche umfassend eine Steuer- und/oder Auswerteeinheit (15), an welche Steuer- und/oder Auswerteeinheit (15) der Manipulator (5) gekoppelt ist, welche Steuer- und/oder Auswerteeinheit (15) dazu ausgebildet ist, die Bewegung des Manipulators (5) und/oder weiterer Maschinenbauteile der Vorrichtung (10) zu steuern.

8. Verfahren zum Umgang mit in mindestens zwei parallelen Reihen (1) bewegten Stückgütern (2), wobei die Stückgüter (2) zu einem Erfassungsbereich (4) wenigstens eines Manipulators (5) transportiert werden,
- wobei im Erfassungsbereich (4) wenigstens ein transportiertes Stückgut (2) der mindestens zwei parallelen Reihen (1) durch den wenigstens einen Manipulator (5) erfasst, von nachfolgenden Stückgütern (2) der jeweiligen Reihe (1) räumlich abgetrennt und in eine definierte relative Zielposition (P) und/oder Zielausrichtung gegenüber den nachfolgenden Stückgütern (2) der jeweiligen Reihe (1) gebracht wird,
- wobei zumindest Raumkoordinaten und/oder eine Position eines der in Transportrichtung (TR) zum Erfassungsbereich (4) bewegten Stückgüter (2) mindestens einer Reihe (1) über wenigstens eine dem Erfassungsbereich (4) räumlich und/oder funktionell zugeordneten und beweglich ausgebildeten optischen Erfassungseinrichtung (40) sensorisch erfasst und einer Steuer- und/oder Auswerteeinheit (15) als Positionswert zur Verfügung gestellt wird, und
- wobei zumindest der Manipulator (5) und/oder weitere zugeordnete Förderkomponenten auf Grundlage der Raumkoordinaten und/oder Positions- und/oder Umrissdaten kalibriert und/oder gesteuert wird/werden
- bei dem die optische Erfassungseinrichtung (40) zumindest temporär parallel zu einer dem Erfassungsbereich (4) zugeordneten Horizontalfördereinrichtung (6) bewegt wird,
- wobei eine optische Erfassungseinrichtung (40) je Transporteinrichtung (3) vorgesehen ist, insbesondere bei dem jeder Reihe (1) jeweils eine optische Erfassungseinrichtung (40) zugeordnet ist,
- wobei mindestens zwei optische Erfassungseinrichtungen (40) im Bereich einer Längsseite der Horizontalfördereinrichtung (6) parallel zur Transportrichtung (TR) in oder entgegen der Transportrichtung (TR) bewegbar sind,
**dadurch gekennzeichnet, dass**
- die mindestens zwei optischen Erfassungseinrichtungen (40) in unterschiedlichen Höhen oberhalb einer durch die Horizontalfördereinrichtung (6) gebildeten Förderfläche oder Förderebene für die Stückgüter (2) angeordnet sind und
- wobei mindestens zwei optische Erfassungseinrichtungen (40) über einen einzigen Antrieb gemeinsam innerhalb eines Bewegungsbereiches parallel zu einer dem Erfassungsbereich (4) zugeordneten Horizontalfördereinrichtung (6) bewegt werden.

9. Verfahren nach Anspruch 8, bei dem die mindestens zwei optischen Erfassungseinrichtungen (40) derart ausgebildet sind, dass eine erste optische Erfassungseinrichtung (40) Stückgüter (2) einer ersten Reihe (1) erfasst und dass eine zweite optische Erfassungseinrichtung (40) Stückgüter (2) einer zweiten Reihe (1) erfasst.

10. Verfahren nach Anspruch 8 oder 9, wobei basierend auf den erfassten Raumkoordinaten und/oder Positions- und/oder Umrissdaten eine Aktivierung oder Inaktivierung der optischen Erfassungseinrichtung (40) erfolgt

11. Verfahren nach Anspruch 8 oder 9, wobei basierend auf der erfassten Raumkoordinaten und/oder Positions- und/oder Umrissdaten ein Mitführen der optischen Erfassungseinrichtung mit der Transporteinrichtung und/oder Horizontalfördereinrichtung erfolgt.

12. Verfahren nach einem der Ansprüche 8 bis 10, wobei die mindestens zwei über einen gemeinsamen Antrieb bewegungstechnische gekoppelten optischen Erfassungseinrichtungen (40) abwechselnd aktiviert werden, um eine saubere Signaltrennung und korrekte Positionsdaten für die jeweils zuvordersten Stückgüter (2) der mindestens zwei Reihen (1) zu erhalten.

13. Verfahren nach einem der Ansprüche 8 bis 12, wobei der Manipulator (5) durch eine Steuer- und/oder Auswerteeinheit (15) einer Vorrichtung (10) nach einem der Ansprüche 1 bis 7 gesteuert wird.

## Claims

1. An apparatus (10) for handling piece goods (2) that are being moved in at least two parallel rows (1), the apparatus (10) comprising
- at least one manipulator (5) for piece goods (2),
- at least two transport devices (3) by way of which the moved piece goods (2) are transportable in a transport direction (TR) to a seizing range (4) of the at least one manipulator (5), and also comprising
- at least one movable optical detection device (40) assigned to the seizing range (4) and/or to a movement space of the at least one manipulator (5), which at least one movable optical detection device (40) is prepared and equipped for the acquisition of space coordinates and/or position data and/or contour data of at least one piece good (2) of the at least two transport devices (3), the at least one piece good (2) being moved in transport direction (TR),
- wherein at least the manipulator (5) and/or further conveyor components of the apparatus (10) is/are calibratable and/or controllable based on the space coordinates and/or position data and/or contour data,
- wherein the at least one optical detection device (40) is designed to be at least temporarily movable parallel to a horizontal conveying device (6) assigned to the seizing range (4),
- wherein one optical detection device (40) is provided for each transport device (3),
- wherein at least two optical detection devices (40) are arranged so as to be movable parallel to the transport direction (TR) in or against the transport direction (TR) in the area of a longitudinal side of the horizontal conveyor device (6),
**characterised in that**
- the at least two optical detection devices (40) are arranged at different heights above a conveyor surface or conveying level for the piece goods (2) formed by the horizontal conveying device (6),
- wherein the at least two optical detection devices (40) comprise a common drive and a common movement range (45) in the area of a longitudinal side of the horizontal conveyor device (6).

2. The apparatus (10) according to claim 1, in which the at least two optical detection devices (40) arranged in the area of a longitudinal side of the horizontal conveyor device (6) each cover different detection ranges (50) in the seizing range (4) of the apparatus (10), in particular, wherein a first optical detection device covers a first detection range in the seizing range (4) of the apparatus (10), which first detection range is in alignment with a first of the at least two transport devices (3), and wherein a second optical detection device covers a second detection range in the seizing range (4) of the apparatus (10), which second detection range is in alignment with a second of the at least two transport devices (3).

3. The apparatus (10) according to one of the previous claims, in which the optical detection device (40) is formed by at least one edge scanner, which delivers space coordinates and/or position data and/or contour data for a moved piece good (2) of the particular assigned row (1) to the control unit and/or analysis unit (15), in particular, which at least one edge scanner delivers space coordinates and/or position data and/or contour data for the in each instance foremost located piece good (2) of the particular assigned row (1) and/or for a contour edge (30) facing forward or backward in transport direction (TR), or in which apparatus (10) the optical detection device (40) is formed by at least one camera with downstream image evaluation from the data of which the control unit and/or analysis unit (12) acquires space coordinates and/or position values and/or contour values for a moved piece good (2) of the particular assigned row (1), in particular, from the data of which at least one camera the control unit and/or analysis unit (15) acquires space coordinates and/or position values and/or contour values for the in each instance foremost located piece good (2) of the particular assigned row (1) and/or for its contour edge (30) facing forward or backward in transport direction (TR).

4. The apparatus (10) according to one of the previous claims, wherein an activation or a deactivation of the optical detection device (40) is triggerable based on the detected space coordinates and/or position data and/or contour data.

5. The apparatus (10) according to one of the claims 1 to 3, wherein a movement of the optical detection device along with the transport device and/or with the horizontal conveying device is triggerable based on the detected space coordinates and/or position data and/or contour data.

6. The apparatus (10) according to one of the previous claims, wherein the at least two optical detection devices (40), which are coupled in terms of movement via a common drive, are activatable alternately in order to obtain a clean signal separation and correct position data for the in each instance foremost piece goods (2) of the at least two rows (1).

7. The apparatus (10) according to one of the previous claims, comprising a control unit and/or analysis unit (15), to which control unit and/or analysis unit (15) the manipulator (5) is coupled, which control unit and/or analysis unit (15) is designed to control the movement of the manipulator (5) and/or of other machine components of the apparatus (10).

8. A method for handling piece goods (2) that are being moved in at least two parallel rows (1), wherein the piece goods (2) are transported to a seizing range (4) of at least one manipulator (5),
- wherein at least one transported piece good (2) of the at least two parallel rows (1) is seized in the seizing range (4) by the at least one manipulator (5), is spatially separated from subsequent piece goods (2) of the particular row (1), and is brought into a specified relative target position (P) and/or target alignment in relation to the subsequent piece goods (2) of the particular row (1),
- wherein at least space coordinates and/or a position of one of the piece goods (2) of at least one row (1) that is being moved in transport direction (TR) to the seizing range (4) is sensor-detected and provided as position value to a control unit and/or analysis unit (15) by at least one optical detection device (40) that is designed to be movable and that is spatially and/or functionally assigned to the seizing range (4), and
- wherein at least the manipulator (5) and/or other assigned conveyor components is/are calibrated and/or controlled based on the space coordinates and/or position data and/or contour data,
- in which the optical detection device (40) is at least temporarily moved parallel to a horizontal conveying device (6) assigned to the seizing range (4),
- wherein one optical detection device (40) is provided for each transport device (3), in particular. in which each row (1) is assigned an optical detection device (40),
- wherein at least two optical detection devices (40) are movable parallel to the transport direction (TR) in or against the transport direction (TR) in the area of a longitudinal side of the horizontal conveyor device (6),
**characterised in that**
- the at least two optical detection devices (40) are arranged at different heights above a conveyor surface or conveying level for the piece goods (2) formed by the horizontal conveying device (6), and
- wherein at least two optical detection devices (40) are moved together via a single drive parallel to a horizontal conveying device (6) assigned to the seizing range (4) within a movement range.

9. The method according to claim 8, in which the at least two optical detection devices (40) are designed such that a first optical detection device (40) detects piece goods (2) of a first row (1) and that a second optical detection device (40) detects piece goods (2) of a second row (1).

10. The method according to claim 8 or 9, wherein an activation or a deactivation of the optical detection device (40) is carried out based on the detected space coordinates and/or position data and/or contour data.

11. The method according to claim 8 or 9, wherein a movement of the optical detection device along with the transport device and/or with the horizontal conveying device is carried out based on the detected space coordinates and/or position data and/or contour data.

12. The method according to one of the claims 8 to 10, wherein the at least two optical detection devices (40), which are coupled in terms of movement via a common drive, are activated alternately in order to obtain a clean signal separation and correct position data for the in each instance foremost piece goods (2) of the at least two rows (1).

13. The method according to one of the claims 8 to 12, wherein the manipulator (5) is controlled by a control unit and/or analysis unit (15) of a device (10) according to one of the claims 1 to 7.

## Revendications

1. Dispositif (10) de manipulation de produits de détail (2) déplacés en au moins deux rangées (1) parallèles, comprenant
- au moins un manipulateur (5) pour les produits de détail (2),
- au moins deux dispositifs de transport (3) par l'intermédiaire desquels les produits de détail (2) déplacés peuvent être transportés dans une direction de transport (TR) vers une zone de saisie (4) dudit au moins un manipulateur (5), ainsi qu'
- au moins un dispositif de détection optique (40) apte à être déplacé qui est associé à la zone de saisie (4) et/ou à un espace de déplacement dudit au moins un manipulateur (5) et qui est préparé et équipé pour acquérir des coordonnées spatiales et/ou des données de position et/ou de contour d'au moins un produit de détail (2) desdits au moins deux dispositifs de transport (3), qui est déplacé dans la direction de transport (TR),
- dans lequel au moins le manipulateur (5) et/ou d'autres composants de transport du dispositif (10) peu(ven)t être calibré(s) et/ou commandé(s) sur la base des coordonnées spatiales et/ou des données de position et/ou de contour,
- dans lequel ledit au moins un dispositif de détection optique (40) est conçu de manière à être au moins temporairement déplaçable parallèlement à un dispositif de transport horizontal (6) associé à la zone de saisie (4),
- dans lequel on prévoit un dispositif de détection optique (40) par dispositif de transport (3),
- dans lequel au moins deux dispositifs de détection optique (40) sont disposés au niveau d'un côté longitudinal du dispositif de transport horizontal (6) de manière à être déplaçables parallèlement à la direction de transport (TR), dans ou contre la direction de transport (TR),
**caractérisé par le fait que**
- lesdits au moins deux dispositifs de détection optique (40) sont disposés à des hauteurs différentes au-dessus d'une surface de transport ou d'un plan de transport pour les produits de détail (2), formé(e) par le dispositif de transport horizontal (6),
- dans lequel lesdits au moins deux dispositifs de détection optique (40) au niveau d'un côté longitudinal du dispositif de transport horizontal (6) comprennent un mécanisme d'entraînement commun et une zone de déplacement commune (45).

2. Dispositif (10) selon la revendication 1, dans lequel lesdits au moins deux dispositifs de détection optique (40) disposés au niveau d'un côté longitudinal du dispositif de transport horizontal (6) couvrent chacun des zones d'identification (50) différentes dans la zone de saisie (4) du dispositif (10), en particulier dans lequel un premier dispositif de détection optique couvre une première zone d'identification dans la zone de saisie (4) du dispositif (10), en alignement par rapport à un premier desdits au moins deux dispositifs de transport (3), et dans lequel un deuxième dispositif de détection optique couvre une deuxième zone d'identification dans la zone de saisie (4) du dispositif (10), en alignement par rapport à un deuxième desdits au moins deux dispositifs de transport (3).

3. Dispositif (10) selon l'une quelconque des revendications précédentes, dans lequel le dispositif de détection optique (40) est formé par au moins un scanner de bord qui fournit à l'unité de commande et/ou d'évaluation (15) des coordonnées spatiales et/ou des données de position et/ou de contour pour un produit de détail (2) déplacé de la rangée (1) respectivement associée, en particulier fournit des coordonnées spatiales et/ou des données de position et/ou de contour pour le produit de détail (2) se trouvant respectivement en premier de la rangée (1) respectivement associée et/ou d'un bord de contour (30) montrant vers l'avant ou vers l'arrière dans la direction de transport (TR), ou dans lequel le dispositif de détection optique (40) est formé par au moins une caméra avec une évaluation d'image montée en aval, à partir des données de laquelle l'unité de commande et/ou d'évaluation (15) acquiert des coordonnées spatiales et/ou des valeurs de position et/ou de contour pour un produit de détail (2) déplacé de la rangée (1) respectivement associée, en particulier acquiert des coordonnées spatiales et/ou des valeurs de position et/ou de contour pour le produit de détail (2) se trouvant respectivement en premier de la rangée (1) respectivement associée et/ou son bord de contour (30) montrant vers l'avant ou vers l'arrière dans la direction de transport (TR).

4. Dispositif (10) selon l'une quelconque des revendications précédentes, dans lequel une activation ou une désactivation du dispositif de détection optique (40) peut être déclenchée sur la base des coordonnées spatiales et/ou données de position et/ou de contour détectées.

5. Dispositif (10) selon l'une quelconque des revendications 1 à 3, dans lequel un transport du dispositif de détection optique avec le dispositif de transport et/ou le dispositif de transport horizontal peut être déclenché sur la base des coordonnées spatiales et/ou données de position et/ou de contour détectées.

6. Dispositif (10) selon l'une quelconque des revendications précédentes, dans lequel lesdits au moins deux dispositifs de détection optique (40) couplés en termes de mouvement via un mécanisme d'entraînement commun peuvent être activés en alternance afin d'obtenir une séparation de signal propre et des données de position correctes pour les produits de détail (2) situés respectivement en premier desdites au moins deux rangées (1).

7. Dispositif (10) selon l'une quelconque des revendications précédentes, comprenant une unité de commande et/ou d'évaluation (15), à laquelle unité de commande et/ou d'évaluation (15) est couplé ledit manipulateur (5), laquelle unité de commande et/ou d'évaluation (15) est conçue pour commander le mouvement du manipulateur (5) et/ou d'autres composants de machine du dispositif (10).

8. Procédé de manipulation de produits de détail (2) déplacés en au moins deux rangées (1) parallèles, dans lequel les produits de détail (2) sont transportés vers une zone de saisie (4) d'au moins un manipulateur (5),
- dans lequel, dans la zone de saisie (4), au moins un produit de détail (2) transporté desdites au moins deux rangées (1) parallèles est saisi par ledit au moins un manipulateur (5), est séparé spatialement de produits de détail (2) suivants de la rangée (1) respective et est amené dans une position cible (P) et/ou une orientation cible relative(s) définie(s) par rapport aux produits de détail (2) suivants de la rangée (1) respective,
- dans lequel au moins des coordonnées spatiales et/ou une position de l'un des produits de détail (2) d'au moins une rangée (1), déplacés dans la direction de transport (TR) vers la zone de saisie (4), est/sont détectée(s) par capteur par l'intermédiaire d'au moins un dispositif de détection optique (40) qui est associé spatialement et/ou fonctionnellement à la zone de saisie (4) et est réalisé de manière mobile, et est/sont mise(s) à la disposition d'une unité de commande et/ou d'évaluation (15) en tant que valeur de position, et
- dans lequel au moins le manipulateur (5) et/ou d'autres composants de transport associés est/sont calibré(s) et/ou commandé(s) sur la base des coordonnées spatiales et/ou des données de position et/ou de contour,
- dans lequel le dispositif de détection optique (40) est déplacé au moins temporairement parallèlement à un dispositif de transport horizontal (6) associé à la zone de saisie (4),
- dans lequel on prévoit un dispositif de détection optique (40) par dispositif de transport (3), en particulier dans lequel à chaque rangée (1) est associé respectivement un dispositif de détection optique (40),
- dans lequel au moins deux dispositifs de détection optique (40) au niveau d'un côté longitudinal du dispositif de transport horizontal (6) sont déplaçables parallèlement à la direction de transport (TR), dans ou contre la direction de transport (TR),
**caractérisé par le fait que**
- lesdits au moins deux dispositifs de détection optique (40) sont disposés à des hauteurs différentes au-dessus d'une surface de transport ou d'un plan de transport pour les produits de détail (2), formé(e) par le dispositif de transport horizontal (6), et
- dans lequel au moins deux dispositifs de détection optique (40) sont déplacés conjointement, par l'intermédiaire d'un seul mécanisme d'entraînement, à l'intérieur d'une zone de déplacement, parallèlement à un dispositif de transport horizontal (6) associé à la zone de saisie (4).

9. Procédé selon la revendication 8, dans lequel lesdits au moins deux dispositifs de détection optique (40) sont conçus de telle sorte qu'un premier dispositif de détection optique (40) détecte des produits de détail (2) d'une première rangée (1) et qu'un deuxième dispositif de détection optique (40) détecte des produits de détail (2) d'une deuxième rangée (1).

10. Procédé selon la revendication 8 ou 9, dans lequel le dispositif de détection optique (40) est activé ou désactivé sur la base des coordonnées spatiales et/ou des données de position et/ou de contour saisies.

11. Procédé selon la revendication 8 ou 9, dans lequel, sur la base des coordonnées spatiales et/ou des données de position et/ou de contour saisies, le dispositif de détection optique est transporté avec le dispositif de transport et/ou le dispositif de transport horizontal.

12. Procédé selon l'une quelconque des revendications 8 à 10, dans lequel lesdits au moins deux dispositifs de détection optique (40) couplés en termes de mouvement via un mécanisme d'entraînement commun peuvent être activés en alternance afin d'obtenir une séparation de signal propre et des données de position correctes pour les produits de détail (2) situés respectivement en premier desdites au moins deux rangées (1).

13. Procédé selon l'une quelconque des revendications 8 à 12, dans lequel le manipulateur (5) est commandé par une unité de commande et/ou d'évaluation (15) d'un dispositif (10) selon l'une quelconque des revendications 1 à 7.
